(19) Europäisches Patentamt
European Patent Office
Office européen des brevets

(11) **EP 2 861 949 B1**

(12) **EUROPÄISCHE PATENTSCHRIFT**

(45) Veröffentlichungstag und Bekanntmachung des Hinweises auf die Patenterteilung:
**17.04.2019 Patentblatt 2019/16**

(21) Anmeldenummer: **13723115.5**

(22) Anmeldetag: **15.05.2013**

(51) Int Cl.:
*G01L 17/00* (2006.01)    *B60C 23/00* (2006.01)

(86) Internationale Anmeldenummer:
**PCT/EP2013/059996**

(87) Internationale Veröffentlichungsnummer:
**WO 2013/185998 (19.12.2013 Gazette 2013/51)**

(54) **VORRICHTUNG UND VERFAHREN ZUR REIFENDRUCKPRÜFUNG**

DEVICE AND METHOD FOR CHECKING TYRE PRESSURE

DISPOSITIF ET PROCÉDÉ DE CONTRÔLE DE LA PRESSION DE GONFLAGE D'UN PNEU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2012 DE 102012210015**

(43) Veröffentlichungstag der Anmeldung:
**22.04.2015 Patentblatt 2015/17**

(73) Patentinhaber: **Robert Bosch GmbH**
**70442 Stuttgart (DE)**

(72) Erfinder:
• **NOBIS, Guenter**
**72622 Nuertingen (DE)**
• **UFFENKAMP, Volker**
**71642 Ludwigsburg (DE)**

(74) Vertreter: **Schmitt-Nilson Schraud Waibel Wohlfrom**
**Patentanwälte Partnerschaft mbB**
**Pelkovenstraße 143**
**80992 München (DE)**

(56) Entgegenhaltungen:
**EP-A1- 0 656 269    DE-A1-102010 026 729**
**US-B1- 6 823 728**

**Beschreibung**

Die Erfindung betrifft eine Vorrichtung und ein Verfahren zum Prüfen des Fülldrucks in einem Reifen eines Fahrzeugs, insbesondere eines rollenden Fahrzeugs.

Stand der Technik

Der Reifenfülldruck eines Kraftfahrzeuges ist für die Sicherheit im Straßenverkehr, für den Komfort und das Fahrverhalten des Fahrzeugs, für den Kraftstoffverbrauch und für den Reifenverschleiß von großer Bedeutung. Ein nicht den Belastungen angepasster Reifenfülldruck kann den Geradeauslauf und die Fahrstabilität und damit die Sicherheit des Fahrzeugs erheblich beeinträchtigen, einen spürbaren Kraftstoffmehrverbrauch verursachen und zu einer deutlichen Verkürzung der Nutzungsdauer der Reifen führen.

Daher ist die Prüfung des Reifenfülldrucks fester Bestandteil des turnusmäßigen Kraftfahrzeug-Service. Diese unterliegen inzwischen einem sehr großen Zeitintervall. Der Reifenfülldruck sollte jedoch regelmäßig ca. alle 2 Wochen und zusätzlich bei besonderen Belastungen wie einer langen Reise mit hoher Geschwindigkeit und/oder schwerem Gepäck kontrolliert werden.

Die Kontrolle des Reifenfülldrucks obliegt der Disziplin des Fahrzeugführers. Gegenwärtig ist eine manuelle Prüfung des Reifenfülldrucks an Tankstellen und in Werkstätten möglich, dies ist jedoch umständlich.

Aus diesen Gründen findet die von den Reifenherstellern empfohlene Kontrolle des Reifenfülldrucks oft deutlich seltener oder gar nicht statt. Es wäre daher vorteilhaft, wenn der Reifenfülldruck z.B. bei der Anfahrt zu einer Tankstelle mit einer Prüfvorrichtung automatisch kontrolliert werden würde.

Aus den vergangenen Jahrzehnten sind etliche Verfahren zur Prüfung des Reifenfülldrucks bekannt.

Generell lassen sich die Verfahren in Verfahren zur direkten und in Verfahren zur indirekten Reifenfülldruckprüfung einteilen, wobei unterschieden werden kann, ob die Prüfung bei stehendem oder bei rollendem Fahrzeug bzw. Reifen erfolgt.

Ein Verfahren zum Prüfen des Reifenfülldrucks mit einem zu adaptierenden Druckmessgerät ist der direkten Reifenfülldruckprüfung bei stehendem Fahrzeug zuzuordnen und zum Beispiel aus FR 2 852 907 A3 bekannt. Darüber hinaus sind auch Verfahren der direkten Reifenfülldruckprüfung bekannt, die sowohl bei stehendem als auch bei rollendem Fahrzeug ausgeführt werden. Bei diesen Verfahren sind am Ventil (JP 3 141 838 U) oder innerhalb des Reifens (DE 19 630 015 A1; US 2008/0133081 A1) ein oder mehrere Sensoren vorgesehen, die den Reifenfülldruck kontinuierlich überwachen. Wenn der Reifenfülldruck einen Schwellwert über- oder unterschreitet, wird dem Fahrzeuglenker eine Warnung angezeigt, und/oder es ertönt ein Warnsignal. Diese Sensoren sind jedoch oftmals ungenau und teuer.

Aus EP 656 269 A1, EP 695 935 A1 und WO 2008/034411 A1 sind Verfahren zur indirekten Reifenfülldruckprüfung bei rollendem Fahrzeug bekannt, bei denen die Räder des Fahrzeugs über eine Kraftsensormatrix rollen.

Aus der Reifenaufstandsfläche und der Aufstandskraft der einzelnen Kraftsensoren innerhalb der Reifenkontaktfläche oder den Unterschieden der gemessenen Aufstandskraft zwischen den einzelnen Kraftsensoren, d.h. aus charakteristischen Unterschieden in der Druckverteilung innerhalb der Reifenkontaktfläche, lässt sich der Reifenfülldruck herleiten.

Kraftsensormatrizen sind jedoch zum einen teuer, weil die Sensoren über eine ausreichend große Fläche angeordnet werden müssen. Zum anderen sind sie anfällig gegen Zerstörung und Fehlmessungen, wenn sie als druckempfindliche Messfolien ausgelegt sind, da sie beim Überrollen mechanischen Querbelastungen durch Anfahren und Bremsen sowie durch den Sturz der Räder und die Vorspur der Radachse ausgesetzt sind.

Weitere Verfahren zur indirekten Reifenfülldruckprüfung bei rollendem Fahrzeug verwenden zur Erfassung der Druckverteilung in der Reifenaufstandsfläche (Latschfläche) anstatt einer Kraftsensormatrix eine Zeilenanordnung von Kraftsensoren. Die Zeile ist so dimensioniert, dass die Breite der Reifenaufstandsfläche (Latschbreite) erfasst werden kann. Die weiterhin zur Ermittlung der Reifenaufstandsfläche notwendige Länge der Reifenaufstandsfläche (Latschlänge) erfordert zusätzlich die Bestimmung der Geschwindigkeit des Kraftfahrzeuges. In US 5 396 817 wird die Geschwindigkeit aus dem Anstieg und dem Abfall des Signals bestimmt, das erzeugt wird, während der Reifen über die Kraftsensorzeile rollt. In EP 892 259 A1 ist in Fahrtrichtung vor der Kraftsensorzeile eine Kontaktschiene angeordnet, um im Zusammenwirken mit der Kraftsensorzeile die Fahrgeschwindigkeit zu ermitteln.

Die zuvor beschriebenen Verfahren mit Kraftsensormatrizen und Kraftsensorzeilen haben bisher keine breite Anwendung erfahren, da die Systeme sehr komplex sind und wegen der großen Datenmenge einer aufwändigen elektronischen Auswerte- und Recheneinheit bedürfen.

Ein Verfahren zur indirekten Reifenfülldruckprüfung bei rollendem Fahrzeug unter Verwendung einzelner Kraftsensoren ist aus WO 1998/052008 A1 bekannt. Bei diesem Verfahren überrollt das Rad zwei piezoelektrische Sensorkabel mit bekanntem Abstand. Piezoelektrische Sensoren erzeugen aufgrund einer auf sie wirkenden Kraft eine Spannung. Die Wellenform des Spannungssignals bei der Überfahrt weist eine vom Reifenluftdruck abhängige Charakteristik auf, die zusätzlich von der Radlast des Kraftfahrzeugs und von der Geschwindigkeit der Überfahrt abhängig ist. Das Verfahren sieht vor, die Geschwindigkeit aus dem bekannten Abstand der beiden Sensorkabel zu bestimmen, die Radlast aus der Amplitude des Spannungssignals abzuschätzen und entsprechende Korrekturen anzubringen, die in einer Datenbank abgelegt sind.

Weiterhin ist auch die optische Erfassung der Kontaktfläche bekannt:

DE 197 05 047 A1 offenbart ein Verfahren zur Messung der Profiltiefe eines Reifens, bei dem das Reifenprofil mit Laserlicht beaufschlagt wird.

DE10 2010 026 729 A1 offenbart eine Vorrichtung zum Messen von Reifenparametern eines Fahrzeugs mit Mitteln zum Erfassen eines Reifendrucks des Fahrzeugs, Mitteln zum Erfassen einer Reifenprofiltiefe des Fahrzeugs und Mitteln zur Ausgabe gemessener Reifenparameter, die den Reifendruck und die Reifenprofiltiefe beinhalten und/oder berücksichtigen. Die Reifendruck-Erfassungsmittel und die Reifenprofiltiefe-Erfassungsmittel weisen eine zum Überfahren durch das Fahrzeug ausgebildete Messanordnung auf, die zum Messen des Reifendrucks sowie der Reifenprofiltiefe bei sich bewegendem Fahrzeug ausgestaltet ist. Die Ausgabemittel zum Anzeigen eines Ergebnisses der Messung sind so ausgebildet, dass eine das Fahrzeug führende Bedienperson diese im Fahrzeug oder aus dem Fahrzeug heraus unmittelbar nach dem Überfahren erfassen kann und/oder die Ausgabemittel sind zum Übertragen des Ergebnisses der Messung mittels eines elektronischen, insbesondere öffentlichen Datenübertragungsnetzes an eine Datenempfängereinheit ausgebildet.

US 6 823 728 B1 beschreibt Techniken zum Bestimmen des Innendrucks eines Luftreifens. Der Druck in einem Reifen kann aus dem Gewicht auf dem Reifen dividiert durch die Fläche des Reifens auf dem Boden bestimmt werden. Flächen- und Gewichtssensoren können zu einem flachen Paket oder einer Matte konfiguriert werden. Wenn ein Fahrzeug über die Matte gefahren wird, extrahieren die Sensoren Gewichts- und Bereichsinformationen von jedem Reifen. Dann berechnet eine Rechenvorrichtung den Reifendruck in jedem der vier Reifen des Fahrzeugs und präsentiert diese Information dem Fahrer visuell oder akustisch. Die Bedienung des Geräts ist für den Fahrer transparent und erfordert nur das Überfahren des Bereichs, in dem die Sensoren ausgebildet sind.

EP 0 656 269 A1 offenbart ein System zum Bestimmen des Luftdrucks in einem Luftreifen eines Fahrzeugs, während dieser auf dem Rad des Fahrzeugs montiert ist. Das System umfasst ein Feld von Lastsensoren, das ein Muster der Kraftverteilung liefert, die von diesem Reifen ausgeübt wird, wenn er sich in Kontakt mit den Sensoren befindet; einen Computer, der programmiert ist, den Luftdruck in dem Reifen aus diesen Daten unabhängig von der Herstellungsart oder dem Modell des Reifens und des Fahrzeugs zu bestimmen, und Mittel zum Darstellen des Luftdrucks. Das Feld von Lastsensoren ist ein zweidimensionales Feld, das ein zweidimensionales Muster der Kraftverteilung liefert, die von dem Reifen ausgeübt wird, während sich das Fahrzeug auf dem Feld bewegt oder auf diesem steht.

US 2009/0290757 offenbart ein Verfahren, bei dem aus Bilddaten eines Objektes ein dreidimensionales Profil des Objektes erzeugt und das dreidimensionale Profil des Objektes analysiert wird, um Anomalien des Objektes zu erkennen.

Bei dem in EP 1 305 590 A1 beschriebenen Verfahren rollt ein Reifen über eine Glasplatte und eine Kamera unterhalb der Glasplatte zeichnet Bilder des Reifens auf. Diese Anordnung ist wegen Verschleiß, Verschmutzung und Gefahr der Beschädigung der Glasplatte für den Einsatz im rauen Umfeld des Straßenverkehrs nicht gut geeignet.

Es besteht somit nach wie vor der Bedarf nach einem robusten, einfach und kostengünstig durchführbaren Verfahren zur indirekten Reifenfülldruckprüfung bei rollendem Fahrzeug und einer Vorrichtung, die zur Durchführung eines solchen Verfahrens ausgebildet ist.

Offenbarung der Erfindung

Eine erfindungsgemäße Vorrichtung zum Prüfen des Fülldrucks in einem Reifen eines über eine Messplatzebene rollenden Fahrzeugs, weist wenigstens eine quer zur Laufrichtung des Reifens angeordnete Sensorvorrichtung, die ausgebildet ist, ein Überrollen des Reifens über die Sensorvorrichtung zu erkennen und ein entsprechendes Ausgangssignal auszugeben; und eine Auswerteeinheit auf. Die Vorrichtung umfasst wenigstens einen quer zur Laufrichtung des Reifens ausgerichteten Kraftsensorbalken, der ausgebildet ist, ein Ausgangssignal an die Auswerteeinheit auszugeben, das eine zeitabhängige Funktion der auf den Kraftsensorbalken einwirkenden Last bzw. Kraft ist. Der Kraftsensorbalken ist in einem bekannten Abstand von der Sensorvorrichtung angeordnet, und die Breite des Kraftsensorbalkens parallel zur Fahrtrichtung ist kleiner als eine zu erwartende Länge einer Reifenaufstandsfläche. Die Auswerteeinheit ist ausgebildet, aus den Ausgangssignalen der Sensorvorrichtung und des Kraftsensorbalkens die Länge der Reifenaufstandsfläche und die Radlast des Reifens zu bestimmen und allein aus diesen beiden Größen mit Hilfe einer Korrelationsfunktion, die eine Beziehung zwischen der Länge der Reifenaufstandsfläche und dem Reifenfülldruck herstellt, auf den Fülldruck in dem Reifen zu schließen. Dabei umfasst die Korrelationsfunktion von der Radlast abhängige, vorab gespeicherte Korrelationskoeffizienten.

In einem erfindungsgemäßen Verfahren zum Prüfen des Fülldrucks in einem Reifen rollt der Reifen über wenigstens eine quer zur Laufrichtung des Reifens angeordnete Sensorvorrichtung, die ausgebildet ist, den Zeitpunkt des Überrollens des Reifens über die Sensorvorrichtung zu erkennen und ein entsprechendes Ausgangssignal auszugeben. Der Reifen rollt auch über wenigstens einen quer zur Laufrichtung des Reifens ausgerichteten Kraftsensorbalken, der ausgebildet ist, ein Ausgangssignal an die Auswerteeinheit auszugeben, das eine zeitabhängige Funktion der auf den Kraftsensorbalken einwirkenden Last ist. Der Kraftsensorbalken ist in einem bekannten Abstand von der Sensorvorrichtung angeordnet, und die Breite des Kraftsensorbalkens parallel zur Fahrtrichtung ist kleiner als eine zu erwartende Länge einer Reifenaufstandsfläche. Aus den Ausgangssignalen der Sensorvorrichtung und des Kraftsensorbalkens werden die Länge der Reifenaufstandsfläche und die Radlast des Reifens bestimmt. Allein aus diesen beiden Größen wird mit Hilfe einer Korrelationsfunktion, die eine Beziehung zwischen der Länge der Reifenaufstandsfläche und dem Reifenfülldruck herstellt, auf den Fülldruck in dem Reifen geschlossen. Dabei umfasst die Korrelationsfunktion von der Radlast abhängige, vorab gespeicherte Korrelationskoeffizienten.

Eine erfindungsgemäße Vorrichtung und ein erfindungsgemäßes Verfahren sind geeignet, um in Bereichen mit geringen Fahrgeschwindigkeiten von Kraftfahrzeugen, wie z.B. an Einfahrten zu Tankstellen, Werkstätten oder Parkplätzen, eine Prüfung des Reifenfülldrucks durchzuführen und unmittelbar einen entsprechenden Hinweis, z.B. durch eine mehrfarbige Ampel, an den Kraftfahrzeugführer zu geben. Die Erfindung stellt durch eine Messung am rollenden Fahrzeug bzw. Reifen eine breit einsetzbare und für den Fahrer komfortable Lösung zur Verfügung. Durch das Bestimmen der Radlast kann der Einfluss der Radlast auf die Reifenaufstandsfläche berücksichtigt werden, und Fehler bei der Bestimmung des Reifenfülldrucks, die sich aus Änderungen der Radlast ergeben, können vermieden oder zumindest reduziert werden. Der Reifenfülldruck kann so mit hoher Genauigkeit bestimmt werden.

Der Kraftsensorbalken ist so ausgebildet, dass er ein einziges (Gesamt-)Signal ausgibt, das eine Funktion der insgesamt auf den Kraftsensorbalken einwirkenden Kraft bzw. Last ist. Da der Kraftsensorbalken insbesondere keine Matrixstruktur aufweist, die ausgebildet ist, um den Verlauf der Last über die Breite des Reifens zu messen, ist der Kraftsensorbalken robuster und einfacher und damit kostengünstiger herstellbar als die bisher verwendeten Kraftsensorzeilen oder - matrizen.

Die Erfindung stellt daher eine kostengünstige und robuste Lösung zur Verfügung, die auch unter rauen Prüfbedingungen eingesetzt werden kann. Eine erfindungsgemäße Vorrichtung kann in die Fahrbahn oder in eine flache Überfahrschwelle, die auf der Fahrbahn angeordnet ist, eingebaut werden. Die Erfindung weist dabei eine ausreichend hohe Genauigkeit zur indirekten Prüfung des Reifenfülldrucks am rollenden Fahrzeug auf.

In einer Ausführungsform schließt das Verfahren ein, zu bestimmen, ob sich der Reifenfülldruck in einem vorgegebenen Bereich befindet, ohne dass dazu der Wert des Reifenfülldrucks exakt bestimmt werden muss. Reifen mit zu geringem Reifenfülldruck (sicherheitsrelevant!) können so mit hoher Wahrscheinlichkeit erkannt werden.

In einer Ausführungsform schließt das Verfahren ein, den Wert des Reifenfülldrucks zu bestimmen. Der Reifenfülldruck kann so für den Fahrer einfach und bequem mit guter Genauigkeit bestimmt werden.

Die Korrelationsfunktion kann eine lineare oder eine nicht-lineare Korrelationsfunktion sein. Es können insbesondere von der Radlast und ggf. dem Reifentyp abhängige Korrelationskoeffizienten, die beispielsweise zuvor berechnet und dann zur späteren Verwendung gespeichert worden sind, verwendet werden. Mit einer von der Radlast abhängigen Korrelationsfunktion kann auf einfache Weise und mit ausreichender Genauigkeit eine Beziehung zwischen der Länge der Reifenaufstandsfläche und dem Fülldruck des Reifens hergestellt werden.

In einer Ausführungsform schließt das Verfahren ein, den zeitlichen Verlauf eines Ausgangssignals wenigstens eines Kraftsensorbalkens, der von einem Reifen des Fahrzeugs überrollt wird, auszuwerten, um die Länge der Reifenaufstandsfläche in Fahrtrichtung zu bestimmen. Insbesondere kann das Verfahren einschließen, markante Zeitpunkte im Signalverlauf zu analysieren und zur Bestimmung der Fahrgeschwindigkeit und der Länge der Reifenaufstandsfläche zu verwenden. Auf diese Weise kann die Länge der Reifenaufstandsfläche zuverlässig bestimmt werden.

In einer Ausführungsform schließt das Verfahren ein, den zeitlichen Verlauf eines Ausgangssignals wenigstens eines Kraftsensorbalkens, der von einem Rad des Fahrzeugs überrollt wird, auszuwerten, um die Radlast des Rades zu bestimmen. Insbesondere kann das Verfahren einschließen, markante Zeitpunkte und Kraftsignale im Signalverlauf zu analysieren und zur Bestimmung der Radlast zu verwenden. Auf diese Weise kann die Radlast des Rades zuverlässig bestimmt werden.

In einer Ausführungsform schließt das Verfahren ein, die Profiltiefe des Reifens zu messen und bei der Berechnung der Länge der Reifenaufstandsfläche zu berücksichtigen. Durch Messen und Berücksichtigen der aktuellen Profiltiefe des Reifens kann die Genauigkeit der Messung erhöht werden, da Fehler, die sich aus Abweichungen der Profiltiefe von einem vorgegebenen Wert ergeben, vermieden oder zumindest reduziert werden.

In einer Ausführungsform schließt das Verfahren ein, die Längen der Reifenaufstandsflächen und/oder die näherungsweise bestimmten Reifenfülldrücke von wenigstens zwei Reifen, insbesondere von Reifen, die auf einer gemeinsamen Achse montiert sind, miteinander zu vergleichen. Auf diese Weise kann die Gleichheit des Reifenfülldrucks mehrerer Reifen, insbesondere von mehreren Reifen, die auf einer gemeinsamen Achse montiert sind, überprüft und die Zuverlässigkeit der Messung erhöht werden.

Figurenbeschreibung

Die Erfindung wird im Folgenden anhand der beigefügten Figuren beschrieben:

     Die Figuren 1a und 1b zeigen die Abhängigkeit der Länge der Reifenaufstandsfläche vom Reifenfülldruck und der Radlast für zwei verschiedene Reifentypen bei jeweils drei verschiedenen Radlasten.

Die Figuren 2a und 2b zeigen die Zusammenhänge zwischen dem Reifendruck und der Länge der Reifenaufstandsfläche für zwei verschiedene Radlasten für verschiedene Reifentypen und Reifenabmessungen.

Die Figuren 3a und 3b zeigen den empfohlenen Reifendruck von Fahrzeugen unterschiedlicher PKW-Fahrzeugklassen für unterschiedliche Beladungszustände.

Figur 3c zeigt schematisch einen Klassifikator zur Klassifikation des Reifenfülldrucks mit vier Zustandsklassen.

Figur 4 zeigt in einer schematischen Darstellung ein Ausführungsbeispiel einer Vorrichtung zur Prüfung des Reifenfülldrucks.

Figur 5 zeigt ein Ausführungsbeispiel einer Überfahrrinne mit einer integrierten Prüfvorrichtung im Querschnitt.

Figur 6 zeigt einen Prüfdeckel der in Figur 5 gezeigten Überfahrrinne in der Aufsicht.

Die Figur 7a zeigt eine schematische Darstellung einer erfindungsgemäßen Messanordnung gemäß einem ersten Ausführungsbeispiel mit einem von links nach rechts über die Messanordnung rollenden Reifen.

Die Figur 7b zeigt eine schematische Darstellung einer erfindungsgemäßen Messanordnung gemäß einem zweiten Ausführungsbeispiel mit einem von links nach rechts über die Messanordnung rollenden Reifen.

Figur 8 zeigt zwei Verläufe des Signals der gemessenen Kraft als Funktion der Zeit beim Rollen eines Fahrzeugreifens über einen Kraftsensorbalken.

Figur 9a zeigt einen Signalverlauf, wie er in der Figur 8 gezeigt ist, im Detail.

Figur 9b zeigt die Signalverläufe von zwei in Fahrtrichtung hintereinander angeordneten Kraftsensorbalken.

Figur 10 zeigt die relative Änderung der Länge der Reifenaufstandsfläche bei maximal zulässigem Reifenprofilverschleiß in Bezug auf einen neuen Reifen als Funktion des Reifenfülldrucks.

Figur 11 zeigt den Reifenfülldruck als Funktion der Länge der Reifenaufstandsfläche für einen neuen Reifen und für einen Reifen mit maximal zulässig verschlissenem Reifenprofil.

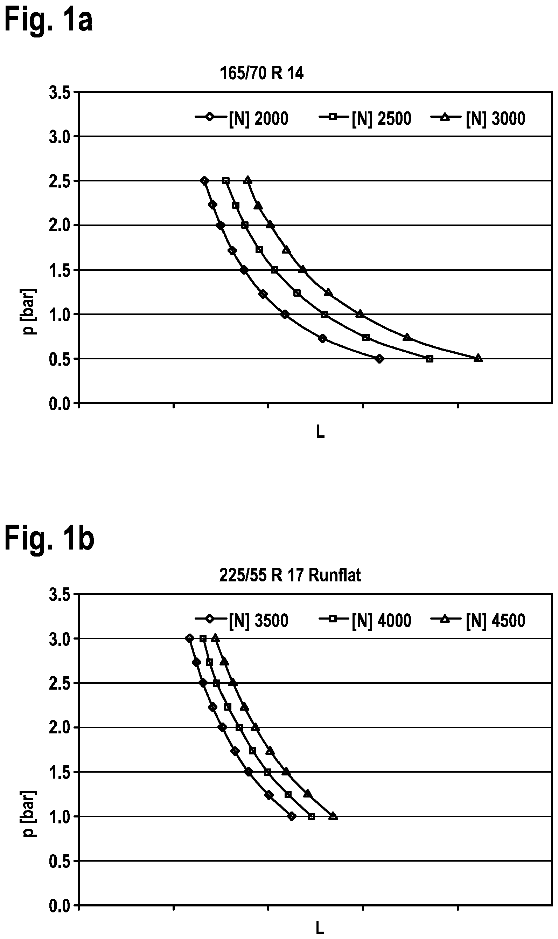

Es ist bekannt, dass die Länge L der Reifenaufstandsfläche eines Reifens 2 vom Reifenfülldruck p des Reifens 2 und der Radlast F, die sich aus dem aktuellen Beladungszustand des Kraftfahrzeugs ergibt, abhängig ist. Die Charakteristik dieser Abhängigkeit variiert zwischen unterschiedlichen Reifentypen bzw. - bauarten. Die Figuren 1a und 1b zeigen diese Abhängigkeit beispielhaft für zwei verschiedene Reifentypen ("165/70 R 14" und "225/55 R 17 Runflat") bei jeweils drei verschiedenen Radlasten F von 2000 N, 2500 N bzw. 3000 N bzw. 3500 N, 4000 N und 4500 N.

Betrachtet man die unterschiedlichen Reifentypen bei gleicher Radlast F, so ergibt sich eine Kurvenschar, die man durch eine geeignete Korrelationsfunktion approximieren kann.

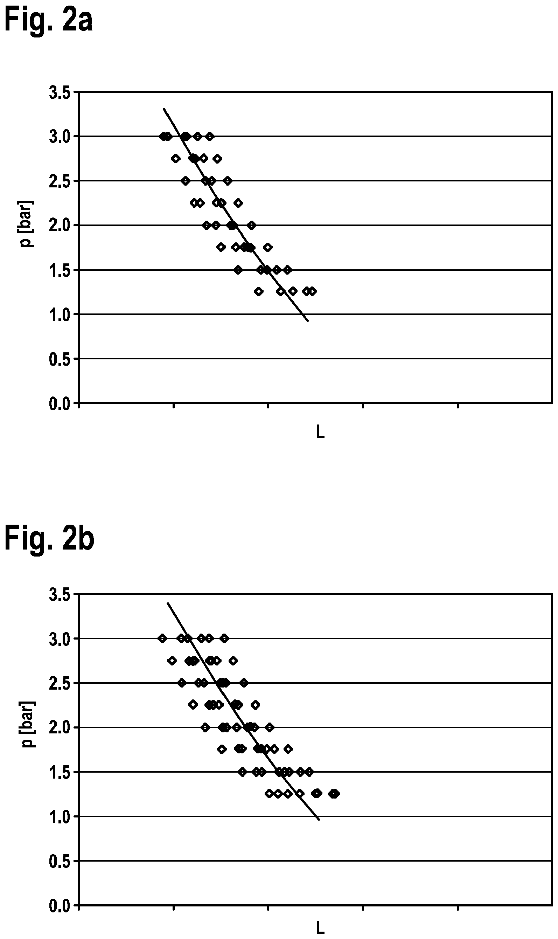

In den Figuren 2a und 2b sind die Zusammenhänge zwischen dem Reifendruck p und der Länge L der Reifenaufstandsfläche für Radlasten F von 3500 N (Fig. 2a) bzw. 4000 N (Fig. 2b) beispielhaft für verschiedene Reifentypen und Reifenabmessungen dargestellt.

Für unterschiedliche Radlasten F erhält man so für die indirekte Berechnung des Reifendrucks p aus der gemessenen Länge L der Reifenaufstandsfläche verschiedene Korrelationsfunktionen. Wird beispielsweise eine lineare Korrelationsfunktion verwendet, stehen für eine konkret gemessene Radlast $F_R$ zur Berechnung der Reifendrucks $p_R$ aus der gemessenen Länge $L_R$ der Reifenaufstandsfläche die Korrelationskoeffizienten $A_i$ und $B_i$ zur Verfügung:

$$p_R = A_i * L_R + B_i$$

Man kann nun für mehrere Radlaststufen $F_{Ri}$, die z.B. einen Abstand von 250 N oder 500 N voneinander haben, die Korrelationskoeffizienten $A_i$ und $B_i$ bestimmen und in einer Radlast-Tabelle ablegen. Unter Verwendung der Korrelationskoeffizienten $A_i$ und $B_i$ kann man dann für jeden Reifen 2 eines Kraftfahrzeuges durch Messen der Radlast $F_R$ und der Länge $L_R$ der Reifenaufstandsfläche den Reifendruck $p_R$ näherungsweise bestimmen.

Bei einer manuellen Prüfung des Reifendrucks p, z.B. an einer Tankstelle, erfolgt die Bewertung der gemessenen Druckwerte durch Vergleichen mit den für das jeweilige Fahrzeug für die Räder 2 an der Vorderachse und an der Hinterachse vom Fahrzeughersteller vorgegebenen Reifendrücken $p_{opt}$. Dabei wird in der Regel zwischen einem teilbeladenen und einem vollbeladenen Fahrzeug unterschieden. Diese Angaben sind z.B. auf einem Aufkleber, der im Tankdeckel des Kraftfahrzeugs angebracht ist, enthalten.

Einem automatischen Messsystem stehen diese fahrzeugspezifischen Informationen für die Bewertung des Reifendrucks p nicht zur Verfügung, und eine allgemein gültige Methode für eine fahrzeugunabhängige Bewertung des Reifendrucks p war bisher nicht bekannt.

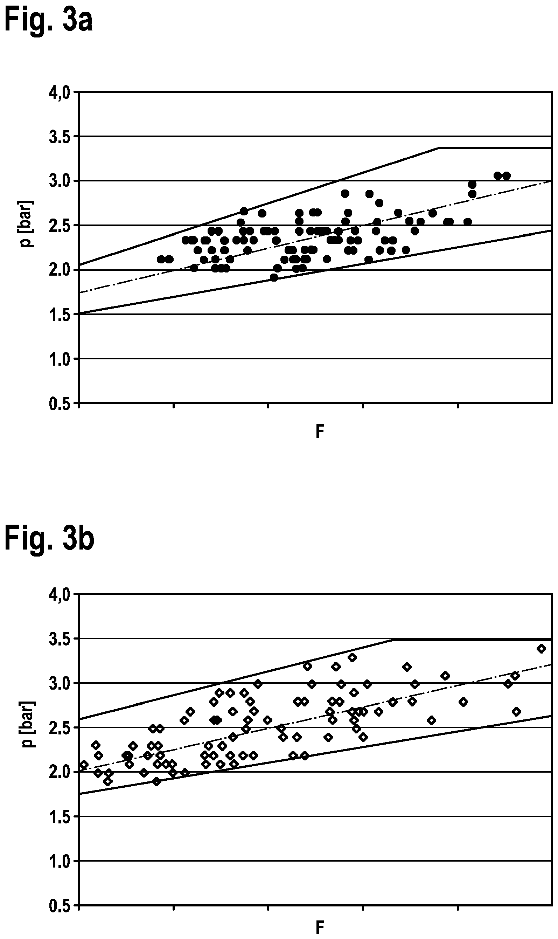

Um eine allgemein gültige Methode für eine fahrzeugunabhängige Bewertung des Reifendrucks p zu schaffen, haben die Erfinder ein breites Spektrum von Fahrzeugen unterschiedlicher PKW-Fahrzeugklassen bei unterschiedlichen Beladungszuständen hinsichtlich des empfohlenen Reifendrucks p analysiert. Die Figuren 3a und 3b zeigen die Ergebnisse für die Vorderachse (Fig. 3a) bzw. Hinterachse (Fig. 3b). Durch eine statistische Datenanalyse wurde eine lineare Korrelationsfunktion zwischen dem empfohlenen Reifendruck $p_{opt}$ und der Radlast F erhalten. Diese Korrelationsfunktion ist in den Figuren 3a und 3b jeweils als Strich-Punkt-Linie dargestellt.

Aus den technischen Hinweisen der Reifenhersteller kann man entnehmen:

Wenn der optimale Reifenfülldruck um nicht mehr als 12% unter- und nicht mehr als 18% überschritten wird, kann mit einem Kraftstoffmehrverbrauch von weniger als 1% und einer Reifen-Lebensdauer größer 95% gerechnet werden. Wenn der Reifendruck größere Abweichungen vom Optimalwert aufweist, sind ein überproportional höherer Kraftstoffverbrauch und eine überproportional verringerte Lebensdauer die Folge.

In den Figuren 3a und 3b sind die entsprechenden Grenzlinien für die beschriebenen und aus praktischen Erwägungen vertretbaren Druckabweichungen als durchgezogene Linien oberhalb und unterhalb der Korrelationsfunktion (Strich-Punkt-Linie) eingezeichnet. Um den näherungsweise berechneten Reifendruck p allgemein gültig zu bewerten, wird im einfachsten Fall auf diesen Grenzlinien ein zweidimensionaler Zustandsklassifikator aufgebaut. Reifendruck p und Radlast F stellen zwei Dimensionen des Zustandsklassifikators dar.

In der Praxis werden für jeden Reifen 2 die Radlast F und die Länge L der Reifenaufstandsfläche mittels Analyse der Signale des Kraftsensorbalkens 3 ermittelt und danach wird der Reifendruck p mit den entsprechenden, von der Radlast abhängigen Korrelationskoeffizienten $A_i$ und $B_i$ aus der Länge L der Reifenaufstandsfläche berechnet. Mit Hilfe des Klassifikators kann dann den betreffenden Reifen 2 mit diesen zwei Parametern einer Zustandsklasse $Z_i$ des Reifendrucks p zugeordnet werden.

Beispielsweise werden vier Zustandsklassen eingeführt, deren Bezeichnung auch als Handlungsanweisung an den Fahrer formuliert ist:

Z1: Reifenfülldruck erhöhen - Sicherheitsrisiko: Ampelfarbe Rot

Z2: Reifenfülldruck prüfen - Erhöhter Kraftstoffverbrauch: Ampelfarbe Gelb

Z3: Reifenfülldruck in Ordnung: Ampelfarbe Grün

Z4: Reifenfülldruck prüfen - Erhöhter Reifenverschleiß: Ampelfarbe Gelb

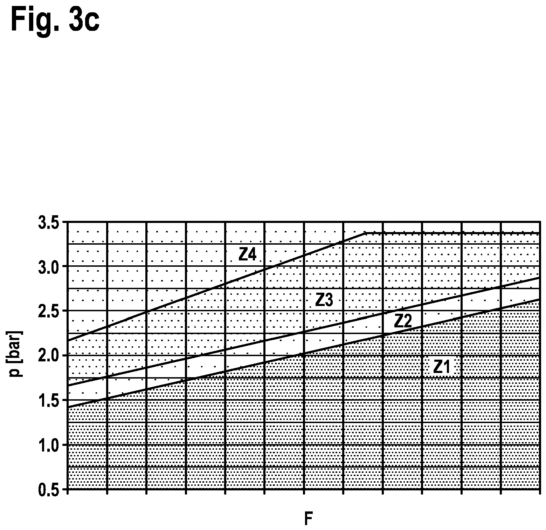

Figur 3c zeigt beispielhaft einen Klassifikator mit den beschriebenen vier Zustandsklassen Z1, Z2, Z3, Z4 für einen PKW. Es ist auch möglich, die Zustandsklassen Z1, Z2, Z3, Z4 anders zu definieren und/oder deren Anzahl zu verringern oder zu erhöhen. Beispielsweise sind für LKW und Busse spezifische Klassifikatoren vorzusehen. Für die Unterscheidung, ob die Klassifikatoren für PKW oder LKW und Busse zu verwenden sind, ist in der Mess- und Auswerteeinheit 4 ein Entscheidungsalgorithmus auf Basis der gemessenen Radlasten (Anzahl und Betrag) vorhanden.

Für die Räder der Vorderachse und der Hinterachse können unterschiedliche Klassifikatoren verwendet werden. Die Entscheidung, welcher Klassifikator für welchen Reifen anzuwenden ist, ergibt sich aus der Reihenfolge der Überfahrt, d.h. den Reifen der ersten Überfahrt wird der Klassifikator der Vorderachse zugeordnet, den Reifen der zweiten Überfahrt der Klassifikator für die Hinterachse. Der Entscheidungsalgorithmus ist Bestandteil der Software in der Mess- und Auswerteeinheit 4.

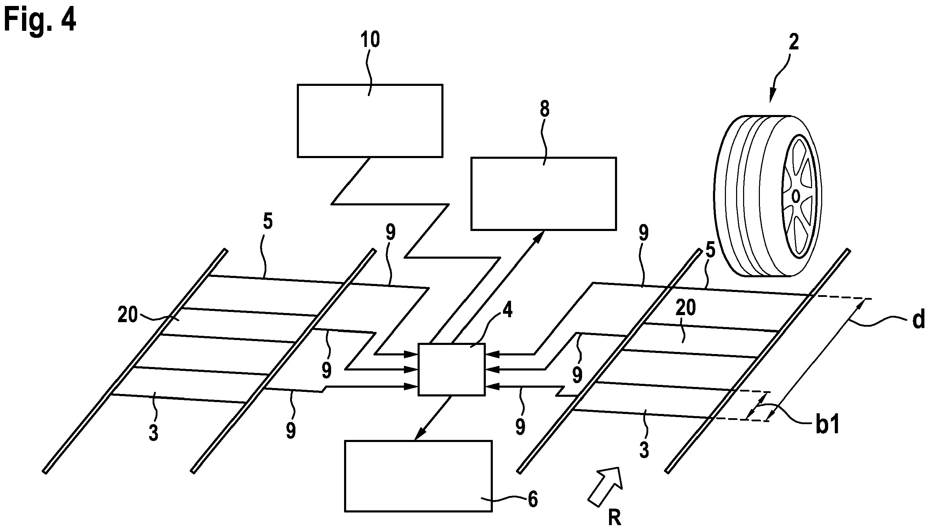

Figur 4 zeigt eine mögliche Ausführungsform einer Vorrichtung zum Prüfen des Reifenfülldrucks p mit wenigstens einer Sensorvorrichtung 5 und wenigstens einem Kraftsensorbalken 3, die in oder auf einer Fahrbahn quer zur Fahrtrichtung R des Kraftfahrzeuges bzw. Ablaufrichtung des Reifens 2 angeordnet sind. Zu einer vollständigen Vorrichtung gehören zwei Sensorvorrichtungen 5 und zwei Kraftsensorbalken 3, jeweils eine(r) für jede Fahrzeugseite. Die Sensorvorrichtungen 5 und die Kraftsensorbalken 3 sind über elektrische Verbindungskabel 9 oder drahtlos mit einer Mess- und Auswerteeinheit 4 verbunden. Die Mess- und Auswerteeinheit 4 ist über elektrische Verbindungskabel 9 oder drahtlos mit einer Anzeigeeinheit 6 und optional mit einem Server 8 verbunden.

Die Mess- und Auswerteeinheit 4 ist zur präzisen Erfassung und Speicherung der Signale, die während jeder Überfahrt eines Reifens 2 über die Kraftsensorbalken 3 und die Sensorvorrichtungen 5 von diesen ausgegeben werden, ausgebildet.

Der in Fahrtrichtung R gemessene Abstand d der Sensorvorrichtungen 5 von dem zugehörigen Kraftsensorbalken 3, die Breite b der Kraftsensorbalken 3 parallel zur Fahrtrichtung R und die Messfrequenz $f_m$, mit der die von dem Kraftsensorbalken 3 erfassten Messwerte abgefragt werden, sind der Mess- und Auswerteeinheit 4 bekannt. Ebenso ist in der Mess- und Auswerteeinheit 4 eine Tabelle mit den zuvor beschriebenen radlastabhängigen Korrelationskoeffizienten $A_i$, $B_i$ gespeichert.

Die Mess- und Auswerteeinheit 4 ist mit einer Rechnereinheit, einer Speichereinheit und einer Auswertesoftware ausgestattet, um eine Analyse der Kraftsignalverläufe, eine Überprüfung der Plausibilität der Messergebnisse, eine Berechnung der Fahrgeschwindigkeit v, der Radlast F, der Länge L der Reifenaufstandsfläche und des Fülldrucks p jedes Reifens 2, eine Bewertung der relativen Abweichung der Längen L der Reifenaufstandsflächen oder der Reifenfülldrücke p der Reifen 2, die an einer gemeinsamen Achse montiert sind, sowie schließlich eine Klassifizierung des Reifenfülldrucks p in vordefinierte Zustandsklassen Z1, Z2, Z3, Z4 als abschließende Zustandsbewertung durchzuführen.

Die Mess- und Auswerteeinheit 4 steuert auch die Anzeigeeinheit 6 an, die zur Ausgabe der Prüfergebnisse vorgesehen ist, sowie optional die Übertragung der Mess- und Prüfergebnisse an einen übergeordneten Server 8.

Die Messgenauigkeit, mit der die Länge L der Reifenaufstandsfläche und die Radlast F bestimmbar sind, wird durch die Messfrequenz $f_m$, die Überfahrgeschwindigkeit v, den Abstand d zwischen der Sensorvorrichtung 5 und dem zugehörigen Kraftsensorbalken 3 und die Breite b des Kraftsensorbalkens 3 festgelegt. Um eine ausreichend hohe Messgenauigkeit zu erreichen, sollte der Abstand d zwischen der Sensorvorrichtung 5 und dem zugehörigen Kraftsensorbalken 3 größer als 200 mm sein, die Messfrequenz $f_m$ sollte wenigstens 2 kHz betragen und die Überfahrgeschwindigkeit v sollte 3 m/s nicht überschreiten.

Die Breite b des Kraftsensorbalkens 3 parallel zur Fahrtrichtung R sollte kleiner als die kleinste zu erwartenden Länge der Reifenaufstandsfläche von ca. 90 mm sein.

Um Fehlmessungen durch ein zufälliges Auslösen der Messung , beispielsweise durch über die Vorrichtung laufende Personen, zu verhindern, kann die Mess- und Auswerteeinheit 4 mit einem Plausibilisierungsalgorithmus ausgestattet sein, der anhand des zeitlichen Verlaufs der Ausgangsdaten der Kraftsensorbalken 3 und/oder Sensorvorrichtung 5 eine Unterscheidung zwischen einer Person und einem Fahrzeug vornimmt und so fehlerhafte Messergebnisse vermeidet.

In einer Ausführungsform ist die beschriebene Vorrichtung um eine zusätzliche Sensorvorrichtung 10 erweitert. Diese zusätzliche Sensorvorrichtung 10 ist geeignet, ein auf die Vorrichtung zufahrendes Fahrzeug zu erkennen. Die zusätzliche Sensorvorrichtung 10 ist mit der Mess- und Auswerteeinheit verbunden und löst den Start der Mess- und Auswerteeinheit 4 kurz vor der Überfahrt eines Fahrzeugs über die Vorrichtung aus.

Zwischen der Sensorvorrichtung 5 und dem zugehörigen Kraftsensorbalken 3 ist jeweils eine Vorrichtung 20 zum Messen der Profiltiefe des Reifens 2 angeordnet. Die Vorrichtungen 20 zum Messen der Profiltiefe können auch in Fahrtrichtung R hinter den Sensorvorrichtungen 5 oder vor den Kraftsensorbalken 3 angeordnet sein und sind optional, d.h. für die Realisierung des erfindungsgemäßen Verfahrens zur Bestimmung des Reifenfülldrucks nicht zwingend erforderlich. Die Messung der Profiltiefe und die Verwendung der Ergebnisse zur Verbesserung der Messergebnisse für den Reifenfülldruck werden weiter unten beschrieben.

Die in den Figuren gezeigte Reihenfolge der Anordnung der Sensorvorrichtung 5 und des Kraftsensorbalkens 3 ist nur beispielhaft. Der Kraftsensorbalken 3 kann alternativ auch in Fahrtrichtung R hinter der Sensorvorrichtung 5 angeordnet sein.

Während der Reifendruckprüfung fährt das Fahrzeug zuerst mit dem Vorderreifen 2 und dann mit dem Hinterreifen 2 über die Vorrichtung. Damit können die Längen L der Reifenaufstandsflächen und die Radlasten F aller Räder 2 eines Fahrzeugs nahezu gleichzeitig bestimmt werden.

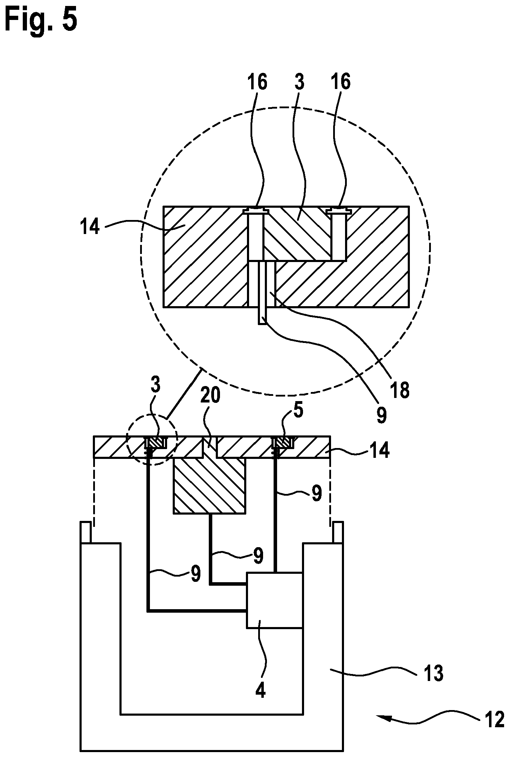

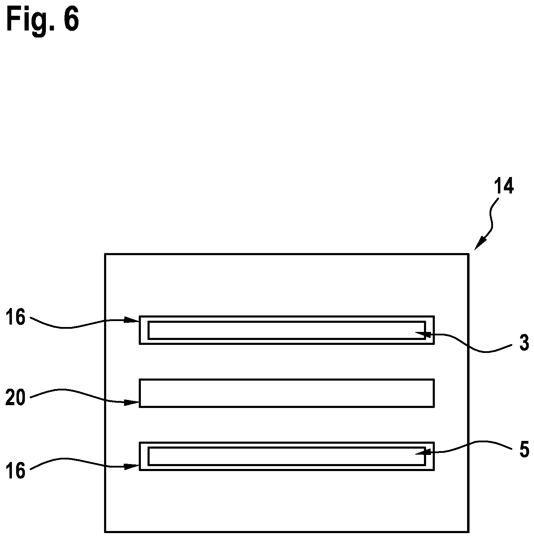

Die Vorrichtung kann zweckmäßigerweise in eine Überfahrrinne 12 integriert sein, wie sie aus dem Straßenbau bekannt und bewährt ist. Die Figur 5 zeigt ein Ausführungsbeispiel mit einer solchen Überfahrrinne 12 im Querschnitt. Figur 6 zeigt einen Deckel 14 für eine derartige Überfahrrinne 12 mit einer darin integrierten Anordnung einer Sensorvorrichtung 5 und eines Kraftsensorbalkens 3 in der Aufsicht.

Die Sensorvorrichtung 5 und der Kraftsensorbalken 3 werden jeweils in einer Aussparung des Deckels 14 der Überfahrrinne 12 montiert, so dass ihre Oberfläche je nach Ausführungsform der Sensorvorrichtung 5 und des Kraftsensorbalkens 3 ggf. erst nach dem Absolvieren des Kraftanstiegs bündig zur Oberkante des Deckels 14 und damit zur Fahrbahnebene ist. Der Zwischenraum zwischen dem Deckel 14 und der Sensorvorrichtung 5 bzw. dem Kraftsensorbalken 3 ist umlaufend mit einem geeigneten Elastomer 16 mit ausreichender Schichtdicke ausgefüllt, um das Eindringen von Nässe, Staub und grobem Schmutz dauerhaft zu verhindern. Vorteilhaft ist es, einen Formschluss zwischen der Aussparung im Deckel 14 und dem Elastomer 16 sowie zwischen Elastomer 16 und der Sensorvorrichtung 5 bzw. dem Kraftsensorbalken 3 vorzusehen. Dazu können der Deckel 14, die Sensorvorrichtung 5 und der Kraftsensorbalken 3 mit einer entsprechenden Formgebung (z.B. einer Nut oder mehreren Rillen) versehen sein.

Die physikalischen Eigenschaften und die Schichtdicke des Elastomers 16 sind so zu bemessen, dass die Auslösekraft der Sensorvorrichtung 5 und des Kraftsensorbalkens 3 ausreichend klein ist, um auch bei kleinen und leichten Fahrzeugen mit geringer Radlast F ein zuverlässiges Auslösen der Sensorvorrichtung 5 und des Kraftsensorbalkens 3 zu gewährleisten.

Alternativ könnten die physikalischen Eigenschaften des Elastomers 16 in dem Algorithmus zum Bestimmen der Länge L der Reifenaufstandsfläche und der Radlast F mit einem Korrekturglied berücksichtigt werden. Dazu kann am Schluss des Fertigungsprozesses eine Kalibrierung der Sensorvorrichtung 5 und des Kraftsensorbalkens 3 durchgeführt werden. Das Ergebnis der Kalibrierung wird dann für jede angeschlossene Sensorvorrichtung 5 bzw. jeden angeschlossenen Kraftsensorbalken 3 in der Mess- und Auswerteeinheit 4 gespeichert und bei der späteren Analyse der gemessenen Signalverläufe berücksichtigt.

Zwischen der Sensorvorrichtung 5 und dem Kraftsensorbalken 3 ist die Vorrichtung 20 zur Messung der Profiltiefe des Reifens 2 angeordnet.

Jede Aussparung im Deckel 14 ist mit einem Durchbruch 18 (z.B. einer Bohrung) zur Durchführung der elektrischen Verbindungskabel 9 von der Sensorvorrichtung 5 bzw. dem Kraftsensorbalken 3 zur Mess- und Auswerteeinheit 4 versehen. Diese kann ebenfalls in die Überfahrrinne 12 integriert sein. Die Montage der Mess- und Auswerteeinheit 4 an der Seitenwand 13 der Überfahrrinne 12 schützt die Mess- und Auswerteeinheit 4 z.B. vor Stauwasser, das sich am Boden der Überfahrrinne 12 ansammelt.

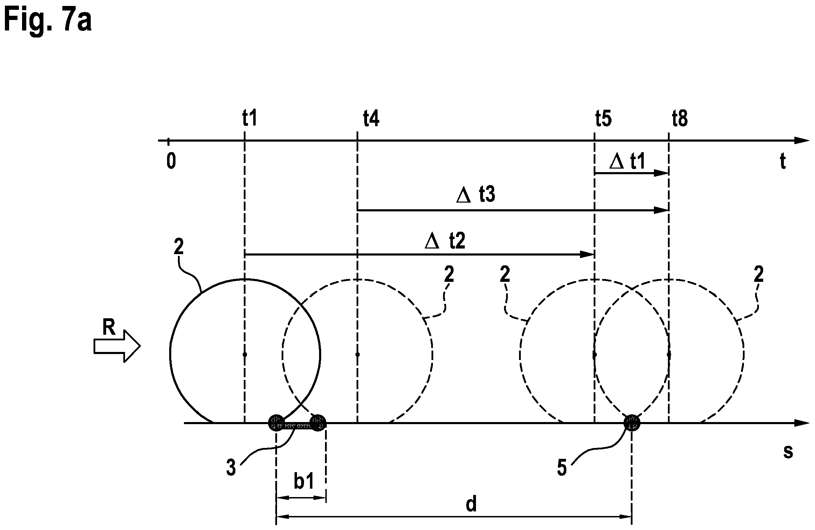

Die Figur 7a zeigt eine schematische Darstellung eines Messvorgangs eines von links nach rechts über den Kraftsensorbalken 3 und die Sensorvorrichtung 5 einer erfindungsgemäßen Messanordnung rollenden Rades bzw. Reifens 2.

Zum Zeitpunkt t1 berührt der Reifen 2 mit der Vorderkante seiner Reifenaufstandsfläche zum ersten Mal den Kraftsensorbalken 3. Zum Zeitpunkt t4 berührt die Hinterkante der Reifenaufstandsfläche letztmalig den Kraftsensorbalken 3.

Zum Zeitpunkt t5 berührt der Reifen 2 mit der Vorderkante seiner Reifenaufstandsfläche zum ersten Mal die Sensorvorrichtung 5. Zum Zeitpunkt t8 berührt die Hinterkante der Reifenaufstandsfläche letztmalig die Sensorvorrichtung 5.

Δt1 = t8 - t5 bezeichnet die Zeitdifferenz zwischen dem ersten und letztmaligen Berühren der Sensorvorrichtung 5 und Δt2 = t5 - t1 bezeichnet die Zeitdifferenz zwischen dem jeweils ersten Berühren des Kraftsensorbalkens 3 und der Sensorvorrichtung 5. Δt3 = t8 - t4 bezeichnet die Zeitdifferenz zwischen dem jeweils letzten Berühren des Kraftsensorbalkens 3 und der Sensorvorrichtung 5.

Da der Abstand d zwischen der Sensorvorrichtung 5 und dem Kraftsensorbalken 3 bekannt ist, können die Überfahrgeschwindigkeit v und die Länge $L_R$ der Reifenaufstandsfläche wie folgt berechnet werden:

$$v_1 = d / (t5 - t1) = d / \Delta t2 \qquad (1)$$

$$L_{R1} = v_1 * (t8 - t5) = v_1 * \Delta t1 \qquad (2)$$

Diese Berechnung ist auch gültig, wenn der Abstand d kleiner als die Länge L der Reifenaufstandsfläche ist, d.h. wenn die Sensorvorrichtung 5 bereits von der Reifenaufstandsfläche erreicht wird, bevor diese den Kraftsensorbalken 3 vollständig verlassen hat.

In dem in der Figur 7a schematisch gezeigten Ausführungsbeispiel ist die Sensorvorrichtung 5 beispielsweise als mechanischer Kontaktschalter ausgebildet. Die Sensorvorrichtung 5 kann alternativ auch als optischer Sensor (z.B. als Lichtschranke) oder als kapazitiver Sensor ausgebildet sein, der die Anwesenheit des Reifens 2 am Messpunkt detektiert.

Der Kraftsensorbalken 3 weist eine geeignet Anordnung von einem oder mehreren Kraftsensoren auf, welche die von dem Reifen 2 auf den Kraftsensorbalken ausgeübte Last messen. Der Kraftsensorbalken 3 gibt zu jedem Zeitpunkt ein Kraftsignal an die Mess- und Auswerteeinheit 4 aus.

In der in der Figur 7a gezeigten Kombination einer Sensorvorrichtung 5 mit einem Kraftsensorbalken 3 muss der Abstand d zwischen der Sensorvorrichtung 5 und dem Kraftsensorbalken 3 als Vorinformation bekannt sein, ansonsten hat die eingesetzte Sensorvorrichtung 5 keinerlei Nutzen. Die Breite b1 des Kraftsensorbalkens 3 kann optional bekannt oder unbekannt sein. Wenn die Breite b1 bekannt ist, ermöglicht dies zusätzliche Überbestimmungen der Überfahrgeschwindigkeit v und/oder der Länge L der Reifenaufstandsfläche, wodurch die Genauigkeit der Messergebnisse verbessert werden kann.

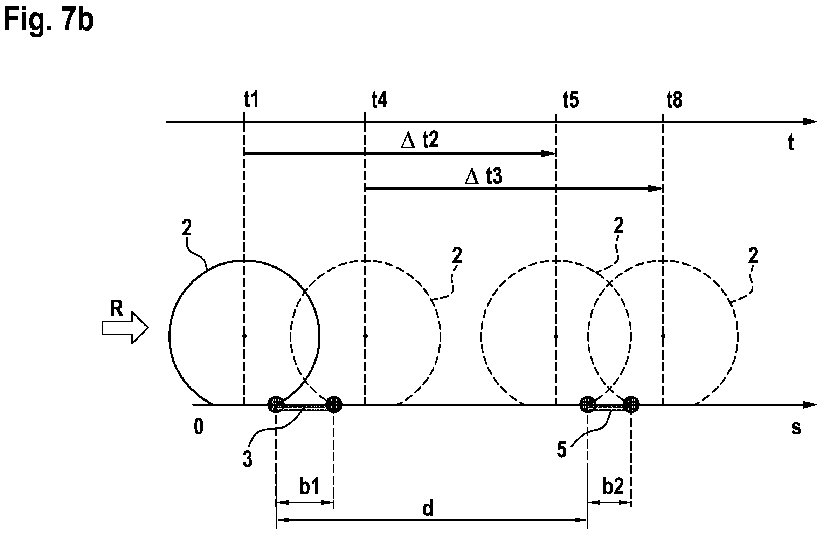

In einem alternativen, in der Figur 7b schematisch gezeigten Ausführungsbeispiel ist die Sensorvorrichtung 5 als zweiter Kraftsensorbalken 5 ausgebildet.

t1 und t4 bezeichnet jeweils erneut den Zeitpunkt der ersten und letzten Berührung der Reifenaufstandsfläche mit dem ersten Kraftsensorbalken 3, der in dem gezeigten Ausführungsbeispiel in Fahrtrichtung R vor dem zweiten Kraftsensorbalken 5 angeordnet ist, und t5 und t8 bezeichnen jeweils den Zeitpunkt der ersten und letzten Berührung der Reifenaufstandsfläche mit dem zweiten Kraftsensorbalken 5.

Δt2 = t5 - t1 bezeichnet den zeitlichen Abstand zwischen den ersten Berührungen und Δt3 = t8 - t4 bezeichnet den zeitlichen Abstand zwischen den letzten Berührungen der Reifenaufstandsfläche mit dem ersten bzw. zweiten Kraftsensorbalken 3, 5.

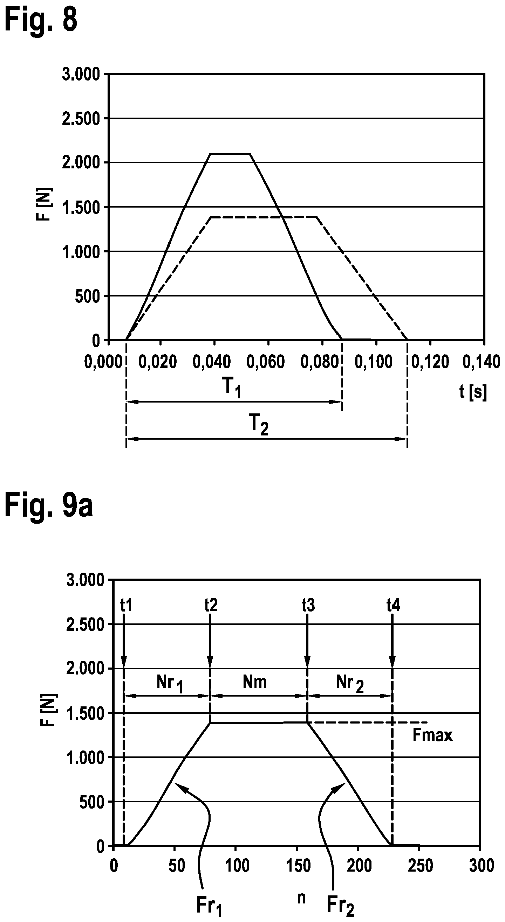

In Figur 8 sind beispielhaft zwei Verläufe des Signals der von einem Kraftsensorbalken 3, 5 gemessenen Kraft (y-Achse) als Funktion der Zeit (x-Achse) beim Rollen eines Reifens 2 über einen Kraftsensorbalken 3, 5 dargestellt, wobei die Reifen 2 in den beiden gezeigten Beispielen unterschiedliche Reifenfülldrücke p haben. Aus den unterschiedlichen Reifenfülldrücken p der Reifen 2 resultieren unterschiedliche Längen L der Reifenaufstandsfläche. Insbesondere hat ein Reifen 2 mit einem höheren Reifenfülldruck eine kürzere Länge L der Reifenaufstandsfläche (Kraft-Zeit-Signal als durchgezogene Linie) mit einer kürzeren Kontaktzeit $T_1 < T_2$ als ein Reifen 2, der mit einem geringeren Reifenfülldruck gefüllt ist (Kraft-Zeit-Signal als gestrichelte Linie).

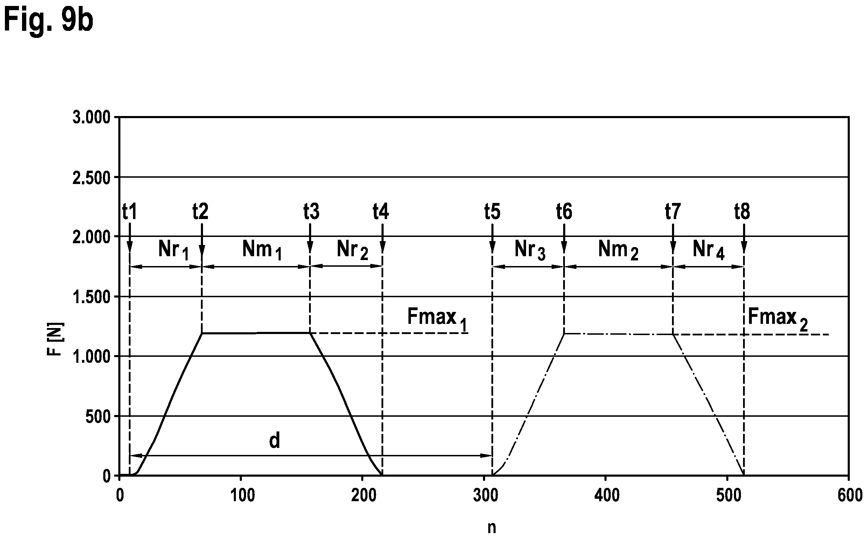

Die Auswertung eines derartigen Signalverlaufs wird im Folgenden im Detail unter Bezugnahme auf die Figuren 9a und 9b beschrieben:
Figur 9a zeigt den Signalverlauf des Kraftsensorbalkens 3 im ersten Ausführungsbeispiel gemäß Figur 7a.

In einem ersten Auswerteschritt wird der Signalverlauf im Hinblick auf markante Zeitpunkte analysiert. Wenn der Reifen zum Zeitpunkt t1 den Kraftsensorbalken 3 erstmals berührt (Beginn des Kraftanstiegs $Fr_1$) erfolgt eine erste Zeitmessung. Eine zweite Zeitmessung erfolgt, wenn der Kraftverlauf zum Zeitpunkt t2 in eine konstante, maximale Kraft $F_{max}$ übergeht, d.h. wenn der Reifen 2 den Weg der Balkenbreite $b_1$ zurückgelegt hat und über die gesamte Breite $b_1$ des Kraftsensorbalkens 3 auf diesem aufliegt. Weitere Zeitmessungen werden vorgenommen, wenn der hintere Bereich der Reifenaufstandsfläche den Kraftsensorbalken 3 wieder verlässt (Zeitpunkt t3), erkennbar am Übergang von der konstanten Kraft in den Kraftabfall $Fr_2$, und wenn der Reifen 2 den Kraftsensorbalken 3 letztmalig berührt (Zeitpunkt t4) und die gemessene Kraft F wieder gleich dem Ausgangswert ist, der gemessen worden ist, bevor der Reifen 2 den Kraftsensorbalken 3 erstmals berührt hat (t < t1).

Für jeden Reifen 2 ergeben sich somit vier Zeitpunkte t1, t2, t3, t4, deren zeitlichen Abstände (Zeitdifferenzen $\Delta t_x$) als Grundlage für die weiteren

Berechnungen ausgewertet werden. Bereits drei dieser Zeitpunkte t1, t2, t3, t4 wären für die folgende Auswertung ausreichend.

Unter der Annahme, dass die Kraftmessungen periodisch mit einer konstanten Messfrequenz $f_m$ als bekannter Zeitbasis durchgeführt werden, kann die Anzahl $Nr_1$, Nm, $Nr_2$ der Messwerte zwischen den zuvor identifizierten Zeitpunkten t1, t2, t3, t4 automatisch ermittelt werden.

$Nr_1$ und $Nr_2$ geben jeweils die Anzahl der Messwerte während des Kraftanstiegs (t1 < t < t2) bzw. während des Kraftabfalls (t3 < t < t4) an. Nm gibt die Anzahl der Messwerte bei maximaler Kraft $F_{max}$ (der Kraftanstieg ist Null) an (t2 <= t <= t3).

Wenn die Breite des Kraftsensorbalkens 3 kleiner als die Länge L der Reifenaufstandsfläche ist, kann die Radlast wie folgt ermittelt werden:

$$F_{R1} = F_{max} * (1 + Nm / Nr_1) \qquad (3)$$

Unter Ausnutzung der mit $Nr_1$ und $Nr_2$ gegeben Überbestimmung kann die Radlast alternativ auch durch

$$F_{R2} = F_{max} * (1 + 2 * Nm / (Nr_1 + Nr_2)) \quad (4)$$

bestimmt werden.

Die Überbestimmung der Zeitmessungen mit den Messpunkten t1, t2, t3, t4, t5 und t8 bietet bei einer bekannten geometrischen Anordnung, insb. bei bekanntem Abstand d und bekannter Breite $b_1$ des Kraftsensorbalkens 3, die Möglichkeit, die Ergebnisse zu korrigieren und/oder die Genauigkeit zu steigern, indem mögliche Änderungen der Überfahrgeschwindigkeit v durch Bremsen bzw. Beschleunigen während der Messung erfasst und bei der Auswertung berücksichtigt werden.

Zusätzlich kann die Messung mit einer entsprechenden Meldung an den Fahrzeugführer als ungültig ausgewiesen werden, wenn die Änderungen der Geschwindigkeit einen vorgegebenen Grenzwert überschreiten und eine sinnvolle Auswertung der Messergebnisse nicht mehr möglich ist.

Z.B. könne aus dem bekannten Abstand d zwischen der Sensorvorrichtung 5 und dem Kraftsensorbalken 3 sowie der bekannten Breite $b_1$ des Kraftsensorbalkens 3 die Überfahrgeschwindigkeit v und die Länge $L_R$ der Reifenaufstandsfläche alternativ wie folgt berechnet werden:

$$v_2 = (d - b_1) / \Delta t3 \qquad (5)$$

$$L_{R2} = v_2 * \Delta t1 = v_2 * (t8 - t5) \qquad (6)$$

Mit der bekannten Breite $b_1$ der Kraftsensorbalkens 3 können die Überfahrgeschwindigkeit v und die Länge $L_R$ der Reifenaufstandsfläche weiterhin allein aus den Messungen am Kraftsensorbalken 3 berechnet werden:

$$v_3 = b_1 * f_m / Nr_1 \qquad (7)$$

$$L_{R3} = v_3 * (Nr_1 + Nm) / f_m \qquad (8)$$

Analog kann anstelle von $Nr_1$ auch $Nr_2$ verwendet werden.

$$v_4 = b_1 * f_m / Nr_2 \qquad (9)$$

$$L_{R4} = v_4 * (Nr_2 + Nm) / f_m \qquad (10)$$

Die Berechnungsformeln (7) bis (10) gelten nur, solange die Breite $b_1$ des Kraftsensorbalkens 3 kleiner als die Länge L der Reifenaufstandsfläche ist. Anderenfalls wird die maximale Kraft $F_{max}$ gemessen, bevor der gesamte Kraftsensorbalken 3 vollständig von der Vorderkante der Reifenaufstandsfläche des Reifens 2 überfahren worden ist, und der von dem Reifen 2 zurückgelegte Weg ist unbestimmt.

Figur 9b zeigt den Signalverlauf des ersten Kraftsensorbalkens 3 und des zweiten Kraftsensorbalkens 5, die im zweiten Ausführungsbeispiel, das in Figur 7b gezeigt ist, in Fahrtrichtung R hintereinander angeordnet sind.

Wenn der Reifen 2 den ersten Kraftsensorbalken 3 erstmalig berührt (Beginn des Kraftanstiegs) erfolgt eine erste Zeitmessung t1. Eine zweite Zeitmessung t2 ergibt sich aus dem Signalverlauf, wenn der gemessene Kraftverlauf in eine konstante Kraft übergeht, d.h. wenn der Reifen 2 den Weg der Breite $b_1$ des ersten Kraftsensorbalkens 3 zurückgelegt hat. Weitere Zeitmessungen ergeben sich, wenn der Reifen 2 den ersten Kraftsensorbalken 3 wieder verlässt (t3), erkennbar am Übergang von der konstanten Kraft zum Kraftabfall, und wenn der Reifen 2 den ersten Kraftsensorbalken 3 letztmalig berührt (t4), d.h. die gemessene Kraft entspricht wieder dem Ausgangszustand vor der Messung (t<t1).

Am zweiten Kraftsensorbalken 5, der an der Stelle der Sensorvorrichtung 5 des ersten Ausführungsbeispiels angeordnet ist, erhält man auf die gleiche Weise vier weitere Zeitmessungen t5 bis t8. Dabei entspricht der Zeitpunkt t5 am zweiten Kraftsensorbalken 5 dem Zeitpunkt t1 am ersten Kraftsensorbalken 3. Je Reifen 2 ergeben sich an den beiden Kraftsensorbalken 3 und 5 somit acht Zeitpunkte t1, t2, t3, t4, t5, t6, t7, t8, deren Differenzen für die weiteren Berechnungen ausgewertet werden können. Bereits drei Zeitmessungen sind für die Berechnungen ausreichend. Die zusätzlichen Zeitmessungen können benutzt werden, um die Genauigkeit der Messergebnisse zu verbessern und mögliche Fehler zu erkennen.

Unter Annahme einer konstanten Messfrequenz $f_m$ als bekannte Zeitbasis kann man den Kraftverlauf hinsichtlich der Anzahl der Messwerte zwischen den zuvor beschriebenen markanten Punkten des Signalverlaufs mit mathematischen Verfahren automatisch analysieren.

$Nr_1$ bzw. $Nr_2$ geben die Anzahl der Messwerte für den Kraftanstieg (t1 bis t2, t5 bis t6) bzw. Kraftabfall (t3 bis t4, t7 bis t8) an. $Nm_1$ bis $Nm_2$ sind die Anzahl der Messwerte mit maximaler Kraft ($Fmax_1$ bzw. $Fmax_2$) im Zeitraum von t2 bis t3 bzw. t6 bis t7.

Mit dem bekannten Abstand d zwischen den beiden Kraftsensorbalken 3, 5 können somit die Überfahrgeschwindigkeit v, die Länge $L_R$ der Reifenaufstandsfläche und die Radlast $F_R$, wie zuvor im Zusammenhang mit der Figur 9a und den Formeln (1), (3), (4), (9) und (10) beschrieben, ermittelt werden. Aus den Messwerten $Fmax_1$, $Fmax_2$, $Nm_1$, $Nm_2$ und $Nr_1$ - $Nr_4$ der beiden Kraftsensorbalken 3, 5 ergeben sich dabei Überbestimmungen für $L_R$ und $F_R$.

Alternativ oder zusätzlich kann die Länge $L_R$ der Reifenaufstandsfläche bei bekannten Balkenbreiten $b_1$ und $b_2$ wie folgt bestimmt werden:

$$v_5 = (d - b_1 + b_2) / \Delta t3 \qquad (11)$$

$$L_{R5a} = v_5 * (Nr_1 + Nm_1) / f_m \qquad (12)$$

$$L_{R5b} = v_5 * (Nr_2 + Nm_1) / f_m \qquad (13)$$

$$L_{R5c} = v_5 * (Nr_3 + Nm_2) / f_m \qquad (14)$$

$$L_{R5d} = v_5 * (Nr_4 + Nm_2) / f_m \qquad (15)$$

Ist die Breite $b_1$, $b_2$ wenigstens eines der Kraftsensorbalken 3, 5 bekannt, können die Überfahrgeschwindigkeit v und die Länge $L_R$ der Reifenaufstandsfläche auch allein aus den Messungen eines Kraftsensorbalkens 3, 5 mit den Formeln (7) und (8) und/oder (9) und (10) berechnet werden.

Die Verwendung eines zweiten Kraftsensorbalkens 5 als Sensorvorrichtung ermöglicht es daher, die Messergebnisse durch zusätzliche Überbestimmung noch weiter zu verbessern.

Bei der Kombination eines ersten Kraftsensorbalkens 3 mit einem zweiten Kraftsensorbalken 5 müssen entweder den Abstand d zwischen den beiden Kraftsensorbalken 3, 5 oder die Breite b1, b2 wenigstens eines der beiden Kraftsensorbalken 3, 5 bekannt sein. Jede darüber hinausgehende Information ermöglicht eine zusätzliche Überbestimmung der Überfahrgeschwindigkeit v und der Länge der Reifenaufstandsfläche L. Die Breiten b1 und b2 der beiden Kraftsensorbalken 3, 5 können verschieden oder gleich sein. Dies bringt für die Messung an sich keinen weiteren Vorteil. Eine gleiche Breite der Kraftsensorbalken 3, 5 hat aber fertigungstechnische Vorteile und vereinfacht das Verfahren, da die Auswerteeinheit nicht jeden Kraftsensorbalken 3, 5 identifizieren und die entsprechende Breite b1, b2 verwenden muss.

Wie bereits beschrieben, kann man für die an einem Rad 2 gemessene Radlast $F_R$ aus der Radlast-Tabelle die entsprechenden Korrelationskoeffizienten $A_i$ und $B_i$ entnehmen und mit diesen Korrelationskoeffizienten und der wie zuvor beschrieben ermittelten Länge $L_R$ der Reifenaufstandsfläche den Reifendruck $p_R$ des Rades 2 näherungsweise berechnen:

$$p_R = A_i * L_R + B_i \qquad (16)$$

Wenn die gemessene Radlast $F_R$ zwischen zwei in der Tabelle abgelegten Radlaststufen $F_{Rn}$ und $F_{R(n+1)}$ liegt, werden die Korrelationskoeffizienten $A_i$ und $B_i$ durch Interpolation zwischen den benachbarten Korrelationskoeffizienten $A_n$ und $A_{(n+1)}$ sowie $B_n$ und $B_{(n+1)}$ ermittelt. In einen nichtlinearen Interpolationsprozess können alternativ auch die Korrelationskoeffizienten mehrerer benachbarter Radlaststufen, z.B. $A_{(n-1)}$, $A_n$, $A_{(n+1)}$ und $A_{(n+2)}$ sowie $B_{(n-1)}$, $B_n$, $B_{(n+1)}$ und $B_{(n+2)}$, in den Interpolationsprozess einbezogen werden.

Mit dem auf diese Weise näherungsweise berechneten Reifendruck $p_R$ und der näherungsweise bestimmten Radlast $F_R$ kann mit Hilfe eines zuvor im Zusammenhang mit der Figur 3c beschriebenen Zustandsklassifikators der Reifendruck p vom Messsystem im Sinne einer Diagnose ausgewertet und bewertet werden.

In weitergehenden Untersuchungen an unterschiedlichen Reifentypen und Reifenabmessungen wurde der Einfluss der Profiltiefe auf die Länge L der Reifenaufstandsfläche bei unterschiedlichen Reifendrücken p und Radlasten F untersucht.

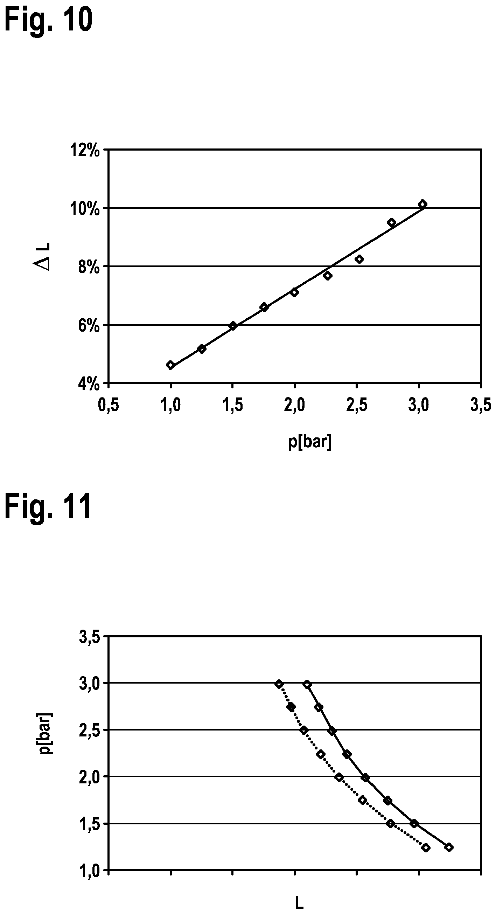

Es ist festzustellen, dass sich die Länge L der Reifenaufstandsfläche mit zunehmendem Reifenverschleiß, d.h. abnehmender Profiltiefe, bei gleichem Reifendruck p und gleicher Radlast F verringert. In Figur 10 ist die relative Änderung ΔL (y-Achse) der Länge der Reifenaufstandsfläche bei maximal zulässigem Reifenverschleiß (minimal zulässiger Profiltiefe) bezogen auf den Neureifen als Funktion des Reifenfülldrucks p (x-Achse) dargestellt.

Die relative Änderung ΔL der Länge der Reifenaufstandsfläche wird hier als Mittelwert von mehreren unterschiedlichen Reifen 2 und zusätzlich als Mittelwert aus jeweils mehreren Radlaststufen dargestellt. Die Mittelung der Radlaststufen wurde gewählt, weil der Einfluss der Radlast auf die Änderung ΔL der Länge der Reifenaufstandsfläche deutlich geringer als der Einfluss des Reifendrucks p ist.

In Figur 10 wird daher die dominierende Abhängigkeit der verschleißbedingten Änderung ΔL der Länge der Reifenaufstandsfläche vom Reifendruck p dargestellt. Demnach wird die Länge L der Reifenaufstandsfläche bis zu 10% von der Profiltiefe bzw. dem Reifenverschleiß beeinflusst. Figur 10 zeigt, dass die Genauigkeit der zuvor beschriebenen indirekten Reifendruckprüfung durch eine Berücksichtigung der Profiltiefe erheblich verbessert werden kann.

Figur 11 unterstreicht dieses Verbesserungspotenzial am Beispiel eines untersuchten Reifens. In der Figur 11 sind bei gleich bleibender Radlast F der Reifenfülldruck p (y-Achse) als Funktion der Länge L der Reifenaufstandsfläche (x-Achse) für einen Neureifen (rechte Kurve) und einen bis an die Zulässigkeitsgrenze verschlissenen Reifen (linke Kurve) dargestellt.

Die näherungsweise Berechnung des Reifendrucks p aus der gemessenen Länge L der Reifenaufstandsfläche und der Radlast F würde im vorliegenden Beispiel bei Verwendung der Korrelationskoeffizienten eines Neureifens für einen verschlissenen Reifen einen um 0,2 bis 0,5 bar überhöhten Reifendruck p ergeben. Dies kann durch die erfindungsgemäße Messung des Reifenprofils und der Korrektur der gemessenen Länge L der Reifenaufstandsfläche auf der Grundlage des gemessenen Reifenprofils vermieden werden.

Ein erweitertes Prüfverfahren umfasst daher zusätzlich die Messung der Profiltiefe an jedem Reifen. Dazu wird eine bekannte Profiltiefen-Messeinrichtung verwendet, die als solche nicht Gegenstand der vorliegenden Erfindung ist.

Als zusätzlicher Schritt wird die gemessene Länge L der Reifenaufstandsfläche mit der gemessenen Profiltiefe korrigiert und die zuvor beschriebene näherungsweise Berechnung des Reifendrucks p ausgehend von der korrigierten Länge der Reifenaufstandsfläche durchgeführt.

Dieser Schritt umfasst die folgenden Teilschritte, wobei der im bisherigen Verfahren gemäß Formel (16) berechnete Reifendruck $p_R$ als vorläufiger Reifendruck $p_{RV}$ bezeichnet wird:

Mit dem vorläufigen Reifendruck $p_{RV}$ wird eine verschleißbedingte Änderung dL der Länge L der Reifenaufstandsfläche berechnet. Dazu wird der statistische Zusammenhang zwischen dem Reifendruck p und einer mittleren Änderung dL der Länge L der Reifenaufstandsfläche je mm Profilverschleiß in Form einer Korrelationsfunktion genutzt. Dieser Zusammenhang lässt sich aus den Daten des in Figur 10 dargestellten Zusammenhangs ableiten.

Für PKW-Sommerreifen sieht die Korrekturrechnung beispielsweise wie folgt aus:

$$dL = 0{,}3 * p_{RV} + 0{,}97 \qquad (17)$$

Für Winterreifen sind in der Regel andere Korrelationskoeffizienten zu verwenden.

Im nächsten Teilschritt wird die korrigierte Länge $L_{RK}$ der Reifenaufstandsfläche aus der gemessenen Länge $L_R$ der Reifenaufstandsfläche, der Längenkorrektur dL und der gemessenen Profiltiefe $T_R$ wie folgt berechnet:

$$L_{RK} = L_R + (T_{max} - T_R) * dL \qquad (18)$$

Dabei ist $T_{max}$ die maximale Profiltiefe eines neuen Reifens. Auch hier sind für Sommer- und Winterreifen in der Regel unterschiedliche Werte zu verwenden.

Anschließend wird der gültige Reifendruck $p_{RK}$, wie zuvor beschrieben (siehe Formel (16)), mit der korrigierten Länge $L_{RK}$ der Reifenaufstandsfläche berechnet:

$$p_{RK} = A_i * L_{RK} + B_i \qquad (19)$$

Dann wird das bisher beschriebene Verfahren fortgeführt und mit dem näherungsweise berechneten Reifendruck $p_{RK}$ und der näherungsweise bestimmten Radlast $F_R$ wird mit Hilfe des oben beschriebenen Zustandsklassifikators der Reifendruck im Sinne einer Diagnose vom Messsystem bewertet.

Die Erweiterung des Verfahrens um eine Profiltiefenmessung bedarf keiner Änderung des zuvor beschriebenen Zustandsklassifikators.

Für die erweiterte Variante mit Profiltiefenmessung und Korrektur der Länge der Reifenaufstandsfläche sind zur Ermittlung der Korrelationskoeffizienten $A_i$ und $B_i$ zur Berechnung des Reifendrucks nur Neureifen zu verwenden. D.h. es ist in diesem Fall eine andere Radlast-Tabelle mit entsprechenden Korrelationskoeffizienten zu verwenden. Dies gilt ebenso für die Radlasttabellen für LKW und Busse.

Die Eingrenzung auf Neureifen reduziert einerseits den Aufwand zur Ermittlung der Radlast-Tabellen und trägt andererseits zu einer Verbesserung der Genauigkeit des näherungsweise berechneten Reifenfülldrucks bei.

Ein weiteres Prüfkriterium für den Reifenfülldruck p stellt die Forderung der Reifen- und Fahrzeughersteller dar, dass die Fülldrücke p aller Reifen 2 einer Achse gleich sein müssen, wogegen die Fülldrücke p der Reifen 2 zwischen Vorder- und Hinterachse durchaus differieren dürfen. Da bei einem eventuellen Reifenwechsel währen der Fahrzeugnutzung auf einer Achse immer Reifen 2 des gleichen Typs montiert werden, ergibt sich aus der Messung der Länge L der Reifenaufstandsfläche bzw. der näherungsweise berechneten Reifenfülldrücke p eine zusätzliche Möglichkeit, Differenzen des Reifenfülldrucks p zwischen dem linken und dem rechten Reifen 2 einer Achse mit relativ hoher Genauigkeit festzustellen.

Bei einer solchen Relativprüfung entfällt der Bedarf einer genauen Kenntnis der Beziehung zwischen der Länge L der Reifenaufstandsfläche und dem Reifenfülldruck p. Die relative Differenz $\Delta$LR zwischen den Längen L der Reifenaufstandsflächen der beiden an einer Achse montierten Reifen 2 oder die relative Differenz $\Delta$p zwischen den beiden Reifenfülldrücken p der Reifen 2 einer Achse darf einen definierten Grenzwert von x% des kleineren der beiden Werte nicht überschreiten. Alternativ kann sich dieser Grenzwert auch auf den größeren der beiden Werte oder auf den Mittelwert beziehen.

Ausgehend von den vorherigen Darlegungen zur Ableitung der Grenzlinien für den "Reifenfülldruck i. O." in Figur 3 und unter Beachtung der Ergebnisse mit sehr unterschiedlichen Reifen 2 in Figur 2 sollte die relative Differenz $\Delta$LR, $\Delta$p zwischen dem linken und rechten Reifen 2 nicht größer als 5% bis 8% sein.

Ein Verfahren zur indirekten Prüfung des Reifendrucks an einer Fahrzeugachse umfasst in der erweiterten Variante die folgenden Verfahrensschritte:

1. Erfassen und Speichern der Zeitpunkte und Messkraft wenigstens eines Kraftsensorbalkens 3 mit konstanter Messfrequenz $f_m$ beim Überrollen mit jeweils einem Rad 2 auf beiden Fahrzeugseiten (mit jeweils einem Kraftsensorbalken 3).

2. Zeitmessung an einer Sensorvorrichtung 5 beim Überrollen des Rades; insbesondere Erfassen der Zeitpunkte des ersten und letzten Kontaktes der Reifenaufstandsfläche mit der Sensorvorrichtung 5 (auf beiden Fahrzeugseiten mit jeweils einem Messsystem)

3. Erfassen und Speichern der Profiltiefe beim Überrollen mit jeweils einem Rad 2 auf beiden Fahrzeugseiten.

4. Analyse des zeitlichen Verlaufs des Messkraftsignals von beiden Rädern zur Bestimmung der Anzahl der Messwerte für den Kraftanstieg ($Nr_1$), der Anzahl der Messwerte mit maximaler Messkraft (Nm) der mittleren maximalen Messkraft ($F_{max}$) sowie ggf. der Anzahl der Messwerte für den Kraftabfall ($Nr_2$)

5. Bestimmen der Geschwindigkeit v, der Länge $L_R$ der Reifenaufstandsfläche und der Radlast $F_R$ für jedes Rad 2 bei bekanntem Abstand d, bekannter Messfrequenz $f_m$ und ggf. bekannter Balkenbreite b1, b2.

6. Prüfen der Plausibilität der Messung für jedes Rad 2, ggf. Korrektur der berechneten Werte oder Abbruch der Reifendruckprüfung und Ausgabe "Fehlmessung".

7. Berechnen des vorläufigen Reifendrucks $p_{RV}$ mittels der radlastabhängigen Korrelationskoeffizienten $A_i$, $B_i$ von Neureifen für jedes Rad 2.

8. Korrigieren der gemessenen Länge $L_R$ der Reifenaufstandsfläche mit der gemessenen Profiltiefe und näherungsweise Berechnung des Reifendrucks $p_{RK}$ für jedes Rad 2.

9. Bestimmen der relativen Differenz $\Delta$LR bzw. $\Delta$p der korrigierten Längen $L_{RK}$ der Reifenaufstandsflächen oder der näherungsweise berechneten Reifendrücke $p_{RK}$ zwischen den Rädern 2 einer Achse und Vergleich der Differenz mit einem vordefinierten Grenzwert.

9a. Ist die berechnete Differenz kleiner oder gleich dem Grenzwert, dann ist das Ergebnis in Ordnung.

9b. Ist die berechnete Differenz größer als der Grenzwert, dann wird das Rad mit der größeren Länge $L_{RK}$ der Reifenaufstandsfläche oder dem geringeren Reifendruck $p_{RK}$ der Zustandsklasse Z2: "Reifenfülldruck prüfen - Erhöhter Kraftstoffverbrauch: Ampelfarbe Gelb" zugeordnet.

10. Zuordnen jedes Rades 2 der Fahrzeugachse anhand der gemessenen Radlast $F_R$ und des näherungsweise berechneten Reifendrucks $p_{RK}$ mittels Klassifikator zu einer von z.B. vier Zustandsklassen Z1, Z2, Z3, Z4 und damit Bewertung des Reifendrucks $p_{RK}$ jedes einzelnen Rades 2.

10a. Wurde das Rad bereits aufgrund der Differenz zwischen den Längen der Reifenaufstandsflächen oder der Differenz der Reifenfülldrücke an einer Achse der Zustandsklasse Z2: "Reifenfülldruck prüfen - Erhöhter Kraftstoffverbrauch: Ampelfarbe Gelb" zugeordnet, so wird diese Zustandsklasse nur dann überschrieben, wenn der Klassifikator für dieses Rad die Zustandsklasse Z1: "Reifenfülldruck erhöhen - Sicherheitsrisiko: Ampelfarbe Rot" ermittelt.

11. Optische Anzeige der Prüfergebnisse jedes Rades für den Fahrer: Reifenfülldruck und/oder Klartext der Bezeichnung der ermittelten Zustandsklasse und/oder der an die Zustandsklasse gekoppelten Ampelfarbe. Optionale Anzeige der Radlast.

12. Optionale Übertragung der Messdaten und Ergebnisse an einen Server.

Die Verfahrensschritte für ein zweiachsiges Fahrzeug umfassen die oben beschriebenen Verfahrensschritte 1 bis 10 für die Vorderachse und unmittelbar daran anschließend die gleichen Verfahrensschritte 1 bis 10 für die Hinterachse. Die Verfahrensschritte 11 und 12 werden für alle Räder des Fahrzeuges gleichzeitig ausgeführt.

Zusätzlich kann an der Anzeigeeinheit auch die Profiltiefe und/oder eine an die Bewertung der Profiltiefe gekoppelte Ampelfarbe für jeden Reifen angezeigt werden. Die Bewertung der Profiltiefe erfolgt dabei mit der gesetzlich vorgegeben Mindestprofiltiefe und einem definierten Wert für die Warnung vor stark abgenutzten Reifen mit nur noch geringer Restnutzungsdauer. Unterschreitet die gemessene Profiltiefe den Warnwert, dann wird die Ampelfarbe "Gelb", bei Unterschreiten der Mindestprofiltiefe wird die Ampelfarbe "Rot" und sonst die Ampelfarbe "Grün" ausgegeben.

Wird das Verfahren ohne die Profiltiefenkorrektur vorgenommen, so entfallen der Schritt 3 "Erfassung und Speicherung der Profiltiefe" und der Schritt 8 "Korrigieren der Länge L der Reifenaufstandsfläche".

## Patentansprüche

1. Vorrichtung zum Prüfen des Fülldrucks (p) in einem Reifen (2) eines über eine Messplatzebene rollenden Fahrzeugs, wobei die Vorrichtung wenigstens eine quer zur Laufrichtung des Reifens (2) angeordnete Sensorvorrichtung (5), die ausgebildet ist, ein Überrollen des Reifens (2) über die Sensorvorrichtung (5) zu erkennen und ein entsprechendes Ausgangssignal auszugeben; und eine Auswerteeinheit (4) aufweist; **dadurch gekennzeichnet, dass** die Vorrichtung wenigstens einen quer zur Laufrichtung des Reifens (2) ausgerichteten Kraftsensorbalken (3) aufweist, der ausgebildet ist, ein Ausgangssignal an die Auswerteeinheit (4) auszugeben, das eine zeitabhängige Funktion der auf den Kraftsensorbalken (3) einwirkenden Last bzw. Kraft ist, wobei der Kraftsensorbalken (3) in einem bekannten Abstand (d) von der Sensorvorrichtung (5) angeordnet ist, und wobei die Breite (b) des Kraftsensorbalkens (3) parallel zur Fahrtrichtung (R) kleiner als eine zu erwartende Länge (L) einer Reifenaufstandsfläche ist, und die Auswerteeinheit (4) ausgebildet ist, aus den Ausgangssignalen der Sensorvorrichtung (5) und des Kraftsensorbalkens (3) die Länge (L) der Reifenaufstandsfläche und die Radlast (F) des Reifens (2) zu bestimmen und allein aus diesen beiden Größen mit Hilfe einer Korrelationsfunktion, die eine Beziehung zwischen der Länge (L) der Reifenaufstandsfläche und dem Reifenfülldruck (p) herstellt, auf den Fülldruck (p) in dem Reifen (2) zu schließen, wobei die Korrelationsfunktion von der Radlast (F) abhängige, vorab gespeicherte Korrelationskoeffizienten (Ai, Bi) umfasst.

2. Vorrichtung nach Anspruch 1, wobei die Sensorvorrichtung (5) einen Kontaktschalter aufweist und/oder als zweiter Kraftsensorbalken ausgebildet ist.

3. Vorrichtung nach einem der vorangehenden Ansprüche, wobei die Auswerteeinheit (4) ausgebildet ist, aus der Länge (L) der Reifenaufstandsfläche zu bestimmen, ob sich der Fülldruck (p) in dem Reifen (2) in einem vorgegebenen Bereich befindet.

4. Vorrichtung nach einem der vorangehenden Ansprüche, wobei die Auswerteeinheit (4) ausgebildet ist, aus der Länge (L) der Reifenaufstandsfläche den Fülldruck (p) in dem Reifen (2) zu bestimmen.

5. Vorrichtung nach einem der vorangehenden Ansprüche, wobei die Auswerteeinheit (4) ausgebildet ist, markante Zeitpunkte (t1, t2, t3, t4, t5, t6, t7, t8) im Verlauf des Ausgangssignals zu identifizieren und zur Bestimmung der Länge (L) der Reifenaufstandsfläche zu verwenden.

6. Vorrichtung nach einem der vorangehenden Ansprüche, wobei die Auswerteeinheit (4) ausgebildet ist, die maximale Kraft (Fmax) im Verlauf des Ausgangssignals zu identifizieren und zur Bestimmung der Radlast (F) zu verwenden.

7. Vorrichtung nach einem der vorangehenden Ansprüche, wobei die Auswerteeinheit (4) ausgebildet ist, die Längen (L) der Reifenaufstandsflächen und/oder die Reifenfülldrücke (p) von wenigstens zwei Reifen (2) miteinander zu vergleichen.

8. Vorrichtung nach Anspruch 7, wobei die Auswerteeinheit (4) ausgebildet ist, die Längen (L) der Reifenaufstandsflächen und/oder die Reifenfülldrücke (p) von wenigstens zwei auf derselben Achse montierten Reifen (2), miteinander zu vergleichen.

9. Vorrichtung nach einem der vorangehenden Ansprüche, die zusätzlich eine Einrichtung (20) zum Messen der Profiltiefe des Reifens (2) aufweist und wobei die Auswerteeinheit (4) ausgebildet ist, die Profiltiefe des Reifens (2) zu messen und bei der Berechnung der Länge (L) der Reifenaufstandsfläche zu berücksichtigen.

10. Vorrichtung nach einem der Ansprüche 1 bis 9, wobei die Breite (b) des Kraftsensorbalkens (3) parallel zur Fahrtrichtung (R) bekannt ist und zur Bestimmung der Länge (L) der Reifenaufstandsfläche verwendet wird.

11. Vorrichtung nach einem der Ansprüche 1 bis 9, wobei die Breite (b) des Kraftsensorbalkens (3) parallel zur Fahrtrichtung (R) nicht bekannt ist und/oder nicht zur Bestimmung der Länge (L) der Reifenaufstandsfläche verwendet wird.

12. Verfahren zum Prüfen des Fülldrucks (p) in einem Reifen (2) eines über eine Messplatzebene rollenden Fahrzeugs, wobei
der Reifen (2) über wenigstens eine quer zur Laufrichtung des Reifens (2) angeordnete Sensorvorrichtung (5) rollt, die ausgebildet ist, den Zeitpunkt des Überrollens des Reifens (2) über die Sensorvorrichtung (5) zu erkennen und ein entsprechendes Ausgangssignal auszugeben;
**dadurch gekennzeichnet, dass**
der Reifen (2) über wenigstens einen quer zur Laufrichtung des Reifens (2) ausgerichteten Kraftsensorbalken (3) rollt, der ausgebildet ist, ein Ausgangssignal an die Auswerteeinheit (4) auszugeben, das eine zeitabhängige Funktion der auf den Kraftsensorbalken (3) einwirkenden Last ist, wobei der Kraftsensorbalken (3) in einem bekannten Abstand (d) von der Sensorvorrichtung (5) angeordnet ist, und wobei die Breite (b) des Kraftsensorbalkens (3) parallel zur Fahrtrichtung (R) kleiner als eine zu erwartende Länge (L) einer Reifenaufstandsfläche ist, und
aus den Ausgangssignalen der Sensorvorrichtung (5) und des Kraftsensorbalkens (3) die Länge (L) der Reifenaufstandsfläche und die Radlast (F) des Reifens bestimmt werden und allein aus diesen beiden Größen mit Hilfe einer Korrelationsfunktion, die eine Beziehung zwischen der Länge (L) der Reifenaufstandsfläche und dem Reifenfülldruck (p) herstellt, auf den Fülldruck (p) in dem Reifen (2) geschlossen wird, wobei die Korrelationsfunktion von der Radlast (F) abhängige, vorab gespeicherte Korrelationskoeffizienten (Ai, Bi) umfasst.

**Claims**

1. A device for checking the inflation pressure (p) in a tire (2) of a vehicle rolling across a measuring station plane,
said device comprising
at least one sensor device (5) arranged transversely to the running direction of the tire (2) and designed to recognize rolling of the tire (2) across the sensor device (5) and to output a corresponding output signal; and
an evaluation unit (4);
**characterized in that** the device comprises at least one force sensor beam (3) oriented transversely to the running direction of the tire (2) and designed to output an output signal to the evaluation unit (4), which is a time-dependent function of the load or force acting on the force sensor beam (3), wherein said force sensor beam (3) is arranged at a known distance (d) from the sensor device (5) and wherein the width (b) of the force sensor beam (3) parallel to the running direction (R) is smaller than a length (L) of a tire contact patch to be expected, and
the evaluation unit (4) is designed to determine from the output signals of the sensor device (5) and the force sensor beam (3) the length (L) of the tire contact patch and the wheel load (F) of the tire (2) and to conclude the inflation pressure (p) in the tire (2) solely from these two parameters with the aid of a correlation function establishing a relationship between the length (L) of the tire patch area and the tire inflation pressure (p), said correlation function comprising pre-stored correlation coefficients (Ai, Bi) dependent on the wheel load (F).

2. The device according to claim 1,
wherein the sensor device (5) comprises a contact switch and/or is designed as a second force sensor beam.

3. The device according to any of the preceding claims, wherein the evaluation unit (4) is designed to determine from the length (L) of the tire contact patch whether the inflation pressure (p) in the tire (2) is within a predetermined range.

4. The device according to any of the preceding claims, wherein the evaluation unit (4) is designed to determine from the length (L) of the tire contact patch the inflation pressure (p) in the tire (2).

5. The device according to any of the preceding claims, wherein the evaluation unit (4) is designed to identify distinctive times (t1, t2, t3, t4, t5, t6, t7, t8) in the course of the output signal and to use the same for determining the length (L) of the tire contact patch.

6. The device according to any of the preceding claims, wherein the evaluation unit (4) is designed to identify the maximum force (Fmax) in the course of the output signal and to use the same for determining the wheel load (F).

7. The device according to any of the preceding claims, wherein the evaluation unit (4) is designate to compare the lengths (L) of the tire contact patches and/or the tire inflation pressures (p) of at least two tires (2).

8. The device according to claim 7,
wherein the evaluation unit (4) is designate to compare the lengths (L) of the tire contact patches and/or the tire inflation pressures (p) of at least two tires (2) mounted on the same axle.

9. The device according to any of the preceding claims, which additionally comprises a means (20) for measuring the tread depth of the tire (2) and wherein the evaluation unit (4) is designed to measure the tread depth of the tire (2) and to consider the same in calculating the length (L) of the tire contact patch.

10. The device according to any of claims 1 to 9, wherein the width (b) of the force sensor beam (3) parallel to the running direction (R) is known and is used for determining the length (L) of the tire contact patch.

11. The device according to any of claims 1 to 9, wherein the width (b) of the force sensor beam (3) parallel to the running direction (R) is not known and/or is not used for determining the length (L) of the tire contact patch.

12. A method for checking the inflation pressure (p) in a tire (2) of a vehicle rolling across a measuring station plane, wherein
said tire (2) rolls across at least one sensor device (5) arranged transversely to the running direction of the tire (2) and designed to recognize the time when said tire (2) rolls across the sensor device (5) and to output a corresponding output signal;
**characterized in that** the tire (2) rolls across at least one force sensor beam (3) oriented transversely to the running direction of the tire (2) and designed to output an output signal to the evaluation unit (4), which is a time-dependent function of the load acting on the force sensor beam (3), wherein the force sensor beam (3) is arranged at a known distance (d) from the sensor device (5), and wherein the the width (b) of the force sensor beam (3) parallel to the running direction (R) is smaller than a length (L) of a tire contact patch to be expected, and
the output signals of the sensor device (5) and the force sensor beam (3) are used to determine therefrom the length (L) of the tire contact patch and the wheel load (F) of the tire, and the inflation pressure (p) in the tire (2) is concluded solely from these two parameters, with the aid of a correlation function establishing a relationship between the length (L) of the tire patch area and the tire inflation pressure (p), said correlation function comprising pre-stored correlation coefficients (Ai, Bi) dependent on the wheel load (F).

**Revendications**

1. Dispositif de contrôle de la pression de gonflage (p) d'un pneumatique (2) d'un véhicule roulant sur le plan d'un poste de mesure,
ce dispositif comprenant
au moins un dispositif de capteur (5) orienté transversalement au sens de roulement du pneumatique (2), conçu pour reconnaître le roulement du pneumatique (2) sur le dispositif de capteur (5) et émettre un signal de sortie correspondant ; et
une unité d'évaluation (4) ;
**caractérisé en ce que** le dispositif présente au moins une barre de capteur de force (3) orientée transversalement par rapport au sens de roulement du pneumatique (2), conçue pour transmettre un signal de sortie à l'unité d'évaluation (4), qui est une fonction dépendante du temps de la charge ou de la force s'exerçant sur la barre de capteur de force (3), sachant que la barre de capteur de force (3) est disposée à une distance connue (d) du dispositif de capteur (5) et que la largeur (b) de la barre de capteur de force (3) parallèle au sens de roulement (R) est inférieure à une longueur (L) escomptée de la surface de contact du pneumatique, et
que l'unité d'évaluation (4) est conçue pour déterminer, à partir des signaux de sortie du dispositif de capteur (5) et de la barre de capteur de force (3), la longueur (L) de la surface de contact du pneumatique et la charge de roue (F) du pneumatique (2) et pour déduire, uniquement sur la base de ces deux grandeurs, la pression de gonflage (p) dans le pneumatique (2), à l'aide d'une fonction de corrélation qui établit une relation entre la longueur (L) de la surface de contact du pneumatique et la pression de gonflage du pneumatique (p), sachant que la fonction de corrélation englobe des coefficients de corrélation (Ai, Bi) dépendants de la charge de roue (F), préalablement enregistrés.

2. Dispositif selon la revendication 1, **caractérisé en ce que** le dispositif de capteur (5) présente un interrupteur de contact et/ou est constitué comme deuxième barre de capteur de force.

3. Dispositif selon l'une des revendications précédentes, où l'unité d'évaluation (4) est conçue pour déterminer, à partir de la longueur (L) de la surface de contact du pneumatique, si la pression de gonflage (p) du pneumatique (2) se situe dans une plage définie.

4. Dispositif selon l'une des revendications précédentes, où l'unité d'évaluation (4) est conçue pour déterminer la pression de gonflage (p) du pneumatique (2) à partir de la longueur (L) de la surface de contact du pneumatique.

**5.** Dispositif selon l'une des revendications précédentes, où l'unité d'évaluation (4) est conçue pour identifier des moments marquants (t1, t2, t3, t4, t5, t6, t7, t8) durant l'émission du signal de sortie et utiliser ces derniers afin de déterminer la longueur (L) de la surface de contact du pneumatique.

**6.** Dispositif selon l'une des revendications précédentes, où l'unité d'évaluation (4) est conçue pour identifier la force maximale (Fmax) durant l'émission du signal de sortie et utiliser cette dernière afin de déterminer la charge de roue (F).

**7.** Dispositif selon l'une des revendications précédentes, où l'unité d'évaluation (4) est conçue pour comparer les longueurs (L) des surfaces de contact et/ou les pressions de gonflage (p) d'au moins deux pneumatiques (2).

**8.** Dispositif selon la revendication 7, où l'unité d'évaluation (4) est conçue pour comparer les longueurs (L) des surfaces de contact et/ou les pressions de gonflage (p) d'au moins deux pneumatiques (2) montés sur le même essieu.

**9.** Dispositif selon l'une des revendications précédentes, présentant en outre une installation (20) de mesure de la profondeur de profil du pneumatique (2) et où l'unité d'évaluation (4) est conçue pour mesurer la profondeur de profil du pneumatique (2) et en tenir compte lors du calcul de la longueur (L) de la surface de contact du pneumatique.

**10.** Dispositif selon l'une des revendications 1 à 9, où la largeur (b) de la barre de capteur de force (3) parallèle au sens de roulement (R) est connue et utilisée pour déterminer la longueur (L) de la surface de contact du pneumatique.

**11.** Dispositif selon l'une des revendications 1 à 9, où la largeur (b) de la barre de capteur de force (3) parallèle au sens de roulement (R) n'est pas connue et/ou n'est pas utilisée pour déterminer la longueur (L) de la surface de contact du pneumatique.

**12.** Procédé de contrôle de la pression de gonflage (p) d'un pneumatique (2) d'un véhicule roulant sur le plan d'un poste de mesure, où
le pneumatique (2) roule sur au moins un dispositif de capteur (5) orienté transversalement au sens de roulement du pneu (2), conçu pour reconnaître le moment où le pneumatique (2) roule sur le dispositif de capteur (5) et émettre un signal de sortie correspondant ;
**caractérisé en ce que**
le pneumatique (2) roule sur au moins une barre de capteur de force (3) orientée transversalement au sens de roulement du pneu (2), conçue pour transmettre un signal de sortie à l'unité d'évaluation (4), qui est une fonction dépendante du temps de la charge s'exerçant sur la barre de capteur de force (3), sachant que la barre de capteur de force (3) est disposée à une distance connue (d) du dispositif de capteur (5) et que la largeur (b) de la barre de capteur de force (3) parallèle au sens de roulement (R) est inférieure à une longueur (L) escomptée de la surface de contact d'un pneumatique, et
qu'à partir des signaux de sortie du dispositif de capteur (5) et de la barre de capteur de force (3), la longueur (L) de la surface de contact du pneumatique et la charge de roue (F) du pneumatique peuvent être déterminées et, uniquement sur la base de ces deux grandeurs, la pression de gonflage (p) dans le pneumatique (2) peut être déduite, à l'aide d'une fonction de corrélation qui établit une relation entre la longueur (L) de la surface de contact du pneumatique et la pression de gonflage du pneumatique (p), sachant que la fonction de corrélation englobe des coefficients de corrélation (Ai, Bi) dépendants de la charge de roue (F), préalablement enregistrés.

# Fig. 1a

**165/70 R 14**

# Fig. 1b

**225/55 R 17 Runflat**

# Fig. 2a

# Fig. 2b

## Fig. 3a

## Fig. 3b

# Fig. 3c

# Fig. 4

EP 2 861 949 B1

# Fig. 5

# Fig. 6

# Fig. 7a

EP 2 861 949 B1

Fig. 7b

# Fig. 8

# Fig. 9a

## Fig. 9b

EP 2 861 949 B1

# Fig. 10

# Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2852907 A3
- JP 3141838 U
- DE 19630015 A1
- US 20080133081 A1
- EP 656269 A1
- EP 695935 A1
- WO 2008034411 A1
- US 5396817 A

- EP 892259 A1
- WO 1998052008 A1
- DE 19705047 A1
- DE 102010026729 A1
- US 6823728 B1
- EP 0656269 A1
- US 20090290757 A
- EP 1305590 A1